# EUROPEAN PATENT SPECIFICATION

(11) **EP 4 343 915 B1**
(45) Date of publication and mention of the grant of the patent: **05.11.2025**
(21) Application number: 22832960.3
(22) Date of filing: 22.06.2022
(51) Int. Cl.: H01M 10/0568, H01M 10/052, H01M 10/0569

(54) **COMPOSITION PRODUCTION METHOD**
VERFAHREN ZUR HERSTELLUNG EINER ZUSAMMENSETZUNG
PROCÉDÉ DE PRODUCTION DE COMPOSITION

(30) Priority: 30.06.2021 JP 2021109047
(43) Date of publication of application: 27.03.2024
(73) Proprietor: Nippon Shokubai Co., Ltd., Osaka-shi, Osaka 541-0043 (JP)
(72) Inventor: KOBATAKE Takayuki, Suita-shi, Osaka 564-0034 (JP); OOKUBO Chie, Suita-shi, Osaka 564-0034 (JP); WATABE Ryo, Suita-shi, Osaka 564-0034 (JP); ARAKAWA Motohiro, Suita-shi, Osaka 564-0034 (JP)
(74) Representative: Germain Maureau
(86) International application number: PCT/JP2022/024862
(87) International publication number: WO 2023/276812

(56) References cited:
- WO-A1-2020/241161
- WO-A1-2020/241161
- JP-A- 2018 055 882
- JP-A- 2021 077 515
- US-A1- 2017 214 092

## Description

### TECHNICAL FIELD

The present disclosure relates to a method for producing a composition being a non-aqueous electrolyte solution.

### BACKGROUND ART

Various studies have been made on non-aqueous electrolyte solutions used in secondary batteries and materials thereof to improve the performance of secondary batteries such as lithium ion secondary batteries. For example, Patent Document 1 proposes a method for producing a non-aqueous electrolyte solution having a low water content. This method includes (a) mixing an acid containing an anion of an alkali metal salt (e.g., bis(fluorosulfonyl)imide (HFSI)), an alkali metal base (e.g., lithium carbonate), and a non-aqueous solvent under the conditions sufficient to produce a solution mixture containing the non-aqueous solvent, water, and an alkali metal salt generated by the reaction of the acid and the alkali metal base and (b) removing vapor containing water from the solution mixture to produce a non-aqueous electrolyte solution. The (b) of this method is repeated by adding a non-aqueous solvent to the produced non-aqueous electrolyte solution.

### CITATION LIST

### PATENT DOCUMENT

Patent Document 1: International Publication WO 2018/144480

### SUMMARY OF THE INVENTION

### TECHNICAL PROBLEM

By the method described in Patent Document 1, however, the solution mixture obtained in the (a) is not sufficiently thermally stable, and the (b) needs to be performed at a temperature kept relatively low to avoid decomposition of LiFSI during the step (b). Thus, this method requires the (b) to be repeated many times to sufficiently reduce the water content of the non-aqueous electrolyte solution, which is inefficient in view of dehydration for replacement with the non-aqueous solvent.

Under these circumstances, the present disclosure has been made to provide a method for producing a composition that allows efficient dehydration for replacement with a non-aqueous solvent and a non-aqueous electrolyte solution containing the composition.

### SOLUTION TO THE PROBLEM

The applicant has disclosed an electrolyte composition containing a sulfonylimide compound and an amidosulfuric acid component in International Publication WO 2020/241161 (the specification of PCT/JP2020/18124). The applicant also discloses a composition containing an electrolyte, a solvent, and an anionic component in the specification of PCT/JP2021/004071. In this composition, the electrolyte contains a sulfonylimide salt (a sulfonylimide compound), and the anionic component contains an acid component having an acid dissociation constant pKa (a first-step acid dissociation constant pKa1 for acids that ionize multiple times) of 0 or more and 6.5 or less at a concentration of 50 ppm by mass or more and 10,000 ppm by mass or less with respect to the electrolyte. The composition containing the sulfonylimide compound has excellent storage stability even at high temperature (being capable of reducing a decomposition reaction of the sulfonylimide compound after long term storage). Further relevant documents are JP 2021 077515 A, WO 2020/241161 A1, US 2017/214092 A1.

To achieve the object described above, the disclosed technique uses the effect exhibited by the addition of the anionic component. Specifically, the anionic component is added to a solution containing the sulfonylimide compound to improve the thermal stability of the solution, and the solution is dehydrated to replace the solvent with a non-aqueous solvent. The present disclosure will be specifically described below.

The present disclosure is directed to a method for producing a composition containing an electrolyte, a non-aqueous solvent, and an anionic component. The electrolyte contains a sulfonylimide compound represented by the general formula (1): LiN(XSO₂)(FSO₂) (1) (where X represents a fluorine atom, an alkyl group with 1 to 6 carbon atoms, or a fluoroalkyl group with 1 to 6 carbon atoms). The anionic component contains a conjugate acid with an acid dissociation constant pKa (a first-step acid dissociation constant pKa1 for acids that ionize multiple times) of 0 or more and 6.5 or less and is contained at a concentration of 10000 ppm by mass or less with respect to the electrolyte. The method includes dehydrating of adding the anionic component to a solution containing the electrolyte and the non-aqueous solvent to dehydrate the solution for solvent replacement.

In the dehydrating of the production method, the anionic component may be contained at a concentration of 4000 ppm by mass or more with respect to the electrolyte. The dehydrating may include adding the anionic component at a concentration of 1000 ppm by mass or more with respect to the electrolyte. The anionic component may be at least one selected from the group consisting of an amidosulfuric acid component, an acetic acid (carboxylic acid) component, a carbonic acid component, and a phosphoric acid component. The anionic component may be at least one selected from the group consisting of a sulfonic acid component, a sulfinic acid component, a carboxylic acid component, a carbonic acid component, a phosphoric acid component, a phosphonic acid component, derivatives thereof, and salts thereof. The anionic component may include at least one selected from the group consisting of amidosulfuric acid and salts thereof and amidosulfuric acid derivatives and salts thereof, and the amidosulfuric acid derivatives and the salts thereof may be compounds represented by the general formula (2): 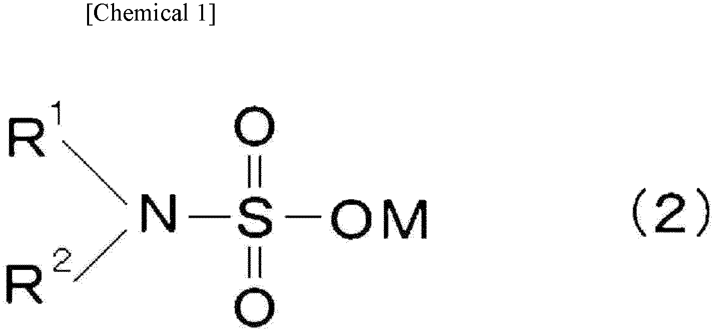 (In the formula (2), R¹ and R² each represent H (hydrogen atom), a hydroxyl group, or an alkyl group with 1 to 10 carbon atoms, a cycloalkyl group with 3 to 10 carbon atoms, an aryl group with 6 to 16 carbon atoms, an aralkyl group with 7 to 16 carbon atoms, or an alkanoyl group with 2 to 16 carbon atoms, each optionally having a substituent, and R¹ and R² may contain a heteroatom and may form a ring structure, R¹ and R² are identical to or different from each other when representing the group other than H (when either one of R¹ or R² is H, R¹ and R² are not identical to each other (R¹ and R² do not simultaneously represent H)), and M represents H (hydrogen atom) or a metal atom).

The anionic component includes at least one selected from the group consisting of amidosulfuric acid and alkali metal salts of amidosulfuric acid. The anionic component may include alkali metal salts of amidosulfuric acid. The non-aqueous solvent may include a chain carbonate solvent. The composition may have a water content of 10000 ppm by mass or less. In the dehydrating, the dehydration efficiency calculated by the following mathematical equation: dehydration efficiency = "the total amount of the non-aqueous solvent used to reach a target water content of the composition" / "the weight of the electrolyte" may be 80 or less.

The non-aqueous electrolyte solution of the present disclosure contains the composition obtained by the production method described above, not forming part of the current invention.

### ADVANTAGES OF THE INVENTION

The present disclosure provides a method for producing a composition that allows efficient dehydration for replacement with a non-aqueous solvent and a non-aqueous electrolyte solution containing the composition.

### DESCRIPTION OF EMBODIMENTS

Embodiments will be described in detail below. The following description of preferred embodiments is merely an example in nature and is not intended to limit the scope, applications, or use of the present disclosure.

### [Method for Producing Composition]

The method for producing a composition of the present embodiment includes at least preparing and dehydrating. Through these processes, a composition containing an electrolyte, a non-aqueous solvent, and an anionic component described below is obtained.

### <Preparing>

**In** the preparing, a solution containing an electrolyte and water and/or a non-aqueous solvent is prepared. Specifically, examples of the solution prepared in the preparing include an aqueous electrolyte solution containing an electrolyte and water, an electrolyte solution containing an electrolyte and a non-aqueous solvent, and a water-containing electrolyte solution containing an electrolyte, water, and a non-aqueous solvent. Hereinafter, the aqueous electrolyte solution, the electrolyte solution, and the water-containing electrolyte solution may be collectively referred to as an "water-containing sulfonylimide solution." Thus, the method for producing a composition of the present embodiment assumes that the water-containing sulfonylimide solution is used.

### (Electrolyte)

The electrolyte contains a sulfonylimide compound represented by the general formula (1):

[Chemical 2] LiN(XSO₂)(FSO₂) (1)

(hereinafter referred to as a "sulfonylimide compound (1)", a fluorine-containing sulfonylimide salt).

The sulfonylimide compound (1) is an electrolyte contained in the composition obtained by the production method of the present embodiment. **In** the general formula (1), X represents a fluorine atom, an alkyl group with 1 to 6 carbon atoms, or a fluoroalkyl group with 1 to 6 carbon atoms.

Examples of the alkyl group with 1 to 6 carbon atoms include a methyl group, an ethyl group, a propyl group, an isopropyl group, a butyl group, a pentyl group, and a hexyl group. Among the alkyl groups with 1 to 6 carbon atoms, a linear or branched alkyl group with 1 to 6 carbon atoms is preferable, and a linear alkyl group with 1 to 6 carbon atoms is more preferable.

Examples of the fluoroalkyl group with 1 to 6 carbon atoms include one obtained by substituting some or all of hydrogen atoms contained in an alkyl group with 1 to 6 carbon atoms with fluorine atoms. Examples of the fluoroalkyl group with 1 to 6 carbon atoms include a fluoromethyl group, a difluoromethyl group, a trifluoromethyl group, a fluoroethyl group, a difluoroethyl group, a trifluoroethyl group, and a pentafluoroethyl group. **In** particular, the fluoroalkyl group may be a perfluoroalkyl group.

As the substituent X, a fluorine atom and a perfluoroalkyl group (e.g., a perfluoroalkyl group with 1 to 6 carbon atoms, such as a trifluoromethyl group, a pentafluoroethyl group, and a heptafluoropropyl group) are preferable. Among them, the fluorine atom, the trifluoromethyl group, and the pentafluoroethyl group are more preferable, the fluorine atom and the trifluoromethyl group are yet more preferable, and the fluorine atom is even more preferable.

Specific examples of the sulfonylimide compound (1) include lithium bis(fluorosulfonyl)imide (LiN(FSO₂)₂, LiFSI), lithium (fluorosulfonyl)(methylsulfonyl)imide, lithium (fluorosulfonyl)(ethylsulfonyl)imide, lithium (fluorosulfonyl)(trifluoromethylsulfonyl)imide, lithium(fluorosulfonyl)(pentafluoroethylsulfonyl)imide, and lithium (fluorosulfonyl)(heptafluoropropylsulfonyl)imide. These sulfonylimide compounds may be used alone or in combination of two or more.

Among the examples of the sulfonylimide compound (1), lithium bis(fluorosulfonyl)imide, lithium (fluorosulfonyl)(trifluoromethylsulfonyl)imide, and lithium(fluorosulfonyl)(pentafluoroethylsulfonyl)imide are preferable, and lithium bis(fluorosulfonyl)imide is more preferable, in view of improving battery performance. In other words, the sulfonylimide compound (1) in the water-containing sulfonylimide solution preferably contains LiN(FSO₂)₂.

As the sulfonylimide compound (1), a commercially available product may be used, or one synthesized by any known method may also be used. A method for synthesizing the sulfonylimide compound (1) is not particularly limited, and all known methods can be adopted. Examples of the method include methods described in International publication WO 2011/149095, Japanese Unexamined Patent Publication Nos. 2014-201453, 2010-168249, 2010-168308, and 2010-189372, International publication WO 2011/065502, Japanese Patent Application Publication No. 8-511274, International publications WO 2012/108284, WO 2012/117961, and WO 2012/118063, Japanese Unexamined Patent Publication Nos. 2010-280586, 2010-254543, and 2007-182410, and International publication WO 2010/010613. By the known method, powder (solid) of the sulfonylimide compound (1) is obtained.

The sulfonylimide compound (1) may contain a production solvent used to produce the sulfonylimide compound (1) (a solvent remaining in the sulfonylimide compound (1) obtained by the known method) within a range where the object of the present invention is not impaired. The remaining solvent refers to, for example, a solvent used in a reaction for the production of the sulfonylimide compound (1) and a solvent used in purification. Examples of such solvents include: water; alcohol solvents such as methanol, ethanol, propanol, and butanol; carboxylic acid solvents such as formic acid and acetic acid; ketone solvents such as acetone, methyl ethyl ketone, methyl isobutyl ketone, and diisobutyl ketone; nitrile solvents such as isobutyronitrile, acetonitrile, valeronitrile, and benzonitrile; ester solvents such as ethyl acetate, isopropyl acetate, and butyl acetate; aliphatic ether solvents such as diethyl ether, diisopropyl ether, t-butyl methyl ether, and cyclopentyl methyl ether; halogen solvents such as HF; nitro group-containing solvents such as nitromethane and nitrobenzene; nitrogen-containing organic solvents such as ethyl formamide and N-methylpyrrolidone; dimethyl sulfoxide; aromatic hydrocarbon solvents such as glyme solvents; toluene, o-xylene, m-xylene, p-xylene, benzene, ethylbenzene, isopropylbenzene, 1,2,3-trimethylbenzene, 1,2,4-trimethylbenzene, 1,3,5-trimethylbenzene, tetralin, cymene, methylethylbenzene, 2-ethyltoluene, chlorobenzene, and dichlorobenzene; chain aliphatic hydrocarbon solvents such as pentane, hexane, heptane, octane, decane, dodecane, undecane, tridecane, decalin, 2,2,4,6,6-pentamethylheptane, isoparaffin (e.g., "MARUKASOL R" (2,2,4,6,6-pentamethylheptane, a mixture of 2,2,4,6,6-pentamethylheptane, manufactured by Maruzen Petrochemical Co., Ltd.)), "ISOPAR (registered trademark) G" (C9-C11 isoparaffin manufactured by Exxon Mobil Corporation), "ISOPAR (registered trademark) E" (C8-C10 isoparaffin manufactured by Exxon Mobil Corporation), dichloromethane, chloroform, and 1,2-dichloroethane; cyclic aliphatic hydrocarbon solvents such as cyclohexane, methylcyclohexane, 1,2-dimethylcyclohexane, 1,3-dimethylcyclohexane, 1,4-dimethylcyclohexane, ethylcyclohexane, 1,2,4-trimethylcyclohexane, 1,3,5-trimethylcyclohexane, propylcyclohexane, butylcyclohexane, and "SWACLEAN 150" (a mixture of C9 alkylcyclohexane manufactured by Maruzen Petrochemical Co., Ltd.); aromatic ether solvents such as anisole, 2-methylanisole, 3-methylanisole, and 4-methylanisole; carbonate solvents such as ethylene carbonate, propylene carbonate, butylene carbonate, dimethyl carbonate, ethyl methyl carbonate, and diethyl carbonate; chain ether solvents such as dimethoxymethane and 1,2-dimethoxyethane; cyclic ether solvents such as tetrahydrofuran, 2-methyltetrahydrofuran, 1,3-dioxane, and 4-methyl-1,3-dioxolane; cyclic ester solvents such as γ-butyrolactone and γ-valerolactone; sulfolane solvents such as sulfolane and 3-methylsulfolane; N,N-dimethylformamide; dimethyl sulfoxide; and N-methyloxazolidinone.

The content of the sulfonylimide compound (1) in the water-containing sulfonylimide solution (the total content when two or more compounds are used together) is preferably 10 mass% or more, more preferably 20 mass% or more, yet more preferably 30 mass% or more, in view of sufficiently reducing the water content of the composition. The content is preferably 40 mass% or more, more preferably 45 mass% or more, yet more preferably 50 mass% or more, still more preferably 60 mass% or more, in view of improving the dehydration efficiency. The upper limit of the content is preferably 80 mass% or less in view of sufficiently reducing the water content of the composition.

As used herein, the term "dehydration efficiency" refers to the efficiency of dehydration of the water-containing sulfonylimide solution for replacement with a non-aqueous solvent in the dehydrating described below. More specifically, it refers to the efficiency of dehydration based on a numerical value calculated by the method described in Examples below.

### (Non-Aqueous Solvent)

Any non-aqueous solvent that can dissolve and disperse the electrolyte (hereinafter also referred to as an "electrolyte solution solvent") can be used. Suitable examples of the non-aqueous solvent include a non-aqueous solvent that has a large dielectric constant and a boiling point of 60°C or higher at normal pressure, dissolves the electrolyte salt well, and is electrochemically stable in a wide range. An organic solvent having a low water content is more preferable. Examples of the organic solvent include: ether solvents such as ethylene glycol dimethyl ether, ethylene glycol diethyl ether, tetrahydrofuran, 2-methyltetrahydrofuran, 2,6-dimethyltetrahydrofuran, tetrahydropyran, crown ethers, triethylene glycol dimethyl ether, tetraethylene glycol dimethyl ether, 1,4-dioxane, and 1,3-dioxolane; chain carbonate ester (carbonate) solvents such as dimethyl carbonate (DMC), ethyl methyl carbonate (EMC), diethyl carbonate (DEC), diphenyl carbonate, and methylphenyl carbonate; saturated cyclic carbonate solvents such as ethylene carbonate, propylene carbonate, 2,3-dimethyl ethylene carbonate, 1,2-butylene carbonate, and erythritan carbonate; cyclic carbonate ester solvents having an unsaturated bond such as vinylene carbonate, methyl vinylene carbonate, ethyl vinylene carbonate, 2-vinyl ethylene carbonate, and phenylethylene carbonate; fluorine-containing cyclic carbonate ester solvents such as fluoroethylene carbonate, 4,5-difluoroethylene carbonate, and trifluoropropylene carbonate; aromatic carboxylic acid ester solvents such as methyl benzoate and ethyl benzoate; lactone solvents such as γ-butyrolactone, γ-valerolactone, and δ-valerolactone; phosphoric acid ester solvents such as trimethyl phosphate, ethyl dimethyl phosphate, diethyl methyl phosphate, and triethyl phosphate; nitrile solvents such as acetonitrile, propionitrile, methoxypropionitrile, glutaronitrile, adiponitrile, 2-methylglutaronitrile, valeronitrile, butyronitrile, and isobutyronitrile; sulfur compound solvents such as dimethyl sulfone, ethyl methyl sulfone, diethyl sulfone, sulfolane, 3-methylsulfolane, and 2,4-dimethylsulfolane; aromatic nitrile solvents such as benzonitrile and tolunitrile; nitromethane; 1,3-dimethyl-2-imidazolidinone; 1,3-dimethyl-3,4,5,6-tetrahydro-2(1H)-pyrimidinone; 3-methyl-2-oxazolidinone; and chain ester solvents such as ethyl acetate, butyl acetate, and propyl propionate. These solvents may be used alone or in combination of two or more.

Among the non-aqueous solvents, the carbonate solvents such as the chain carbonate ester solvents and the cyclic carbonate ester solvents, the lactone solvents, the ether solvents, and the chain ester solvents are preferable, dimethyl carbonate, ethyl methyl carbonate, diethyl carbonate, ethylene carbonate, propylene carbonate, γ-butyrolactone, and γ-valerolactone are more preferable, the carbonate solvents such as dimethyl carbonate, ethyl methyl carbonate, diethyl carbonate, ethylene carbonate, and propylene carbonate are yet more preferable, and the chain carbonate solvents such as dimethyl carbonate, ethyl methyl carbonate, and diethyl carbonate are still more preferable. That is, the non-aqueous solvent preferably contains the carbonate solvent, more preferably contains the chain carbonate solvent, and still more preferably contains the chain carbonate solvent alone.

**In** the preparing, the water-containing sulfonylimide solution may or may not contain an anionic component described later. When the water-containing sulfonylimide solution contains the anionic component, the anionic component is preferably contained in an amount of 10000 ppm by mass or less, more preferably 7500 ppm by mass or less, yet more preferably 5500 ppm by mass or less, still more preferably 4500 ppm by mass or less, particularly preferably 4000 ppm by mass or less, with respect to the electrolyte.

### (Method for Preparing Water-Containing Sulfonylimide Solution)

The water-containing sulfonylimide solution may be prepared by any method. Examples of the method include: a method of dissolving powder (solid) of the sulfonylimide compound (1) in water and/or a non-aqueous solvent; and a method of mixing water and/or a non-aqueous solvent, a lithium salt such as LiOH and Li₂CO₃, and bis(fluorosulfonyl)imide (HFSI) for reaction with each other. Examples of the lithiation reaction of HFSI include a method described in International publication WO 2014/035464.

### <Dehydrating>

In the dehydrating, a non-aqueous solvent is added to the water-containing sulfonylimide solution obtained in the preparing to dehydrate the solution by azeotropic distillation of water contained in the water-containing sulfonylimide solution and the added non-aqueous solvent for replacement with the added non-aqueous solvent. The "water contained in the water-containing sulfonylimide solution" refers to water used in the preparing and water contained in raw materials such as the sulfonylimide compound (1) and the non-aqueous solvent. One of features of the method for producing a composition of the present embodiment is that an anionic component is also added to the water-containing sulfonylimide solution together with the non-aqueous solvent before the dehydration for replacement with the non-aqueous solvent. Specifically, the solution to be dehydrated for replacement with the non-aqueous solvent (hereinafter also referred to as a "water-containing sulfonylimide solution for dehydration") contains the anionic component in addition to the sulfonylimide compound (1), water, and the non-aqueous solvent. When the water-containing sulfonylimide solution obtained in the preparing is an electrolyte solution containing a non-aqueous solvent or a water-containing electrolyte solution (other than the aqueous electrolyte solution), the non-aqueous solvent may not be added together with the anionic component added to the electrolyte solution or the water-containing electrolyte solution. That is, a solution obtained by adding the anionic component alone to the electrolyte solution or the water-containing electrolyte solution may be used as the water-containing sulfonylimide solution for dehydration. The water-containing sulfonylimide solution for dehydration prepared as described above contains the anionic component, and thus, has good thermal stability. As a result, decomposition of LiFSI is reduced although the water-containing sulfonylimide solution for dehydration is dehydrated at a relatively high temperature for replacement with a non-aqueous solvent. The addition of the anionic component also improves the efficiency of dehydrating the water-containing sulfonylimide solution for dehydration for replacement with the non-aqueous solvent (dehydration efficiency). The advantageous effect of the addition of the anionic component saves time taken by the dehydrating, improving the productivity of the composition.

The content of the sulfonylimide compound (1) in the water-containing sulfonylimide solution for dehydration (the total content when two or more compounds are used together) is preferably 10 mass% or more, more preferably 20 mass% or more, yet more preferably 30 mass% or more, in view of sufficiently reducing the water content of the composition. The content is preferably 40 mass% or more, more preferably 45 mass% or more, yet more preferably 50 mass% or more, in view of improving the dehydration efficiency. The upper limit of the content is preferably 60 mass% or less in view of sufficiently reducing the water content of the composition.

### (Non-Aqueous Solvent)

In the dehydrating, a solvent (electrolyte solution solvent) similar to the non-aqueous solvent used in the preparing can be used as the non-aqueous solvent added to the water-containing sulfonylimide solution (hereinafter also referred to as an "additive solvent") as necessary. When the water-containing sulfonylimide solution is an electrolyte solution containing a non-aqueous solvent or a water-containing electrolyte solution (other than the aqueous electrolyte solution), the additive solvent may be the same as or different from the non-aqueous solvent used in the preparing.

Among the additive solvents, chain carbonate ester (chain carbonate) solvents, ether solvents, chain ester solvents, and nitrile solvents are preferable, dimethyl carbonate, ethyl methyl carbonate, diethyl carbonate, ethylene glycol dimethyl ether, ethylene glycol diethyl ether, tetrahydrofuran, 2-methyltetrahydrofuran, ethyl acetate, butyl acetate, propyl propionate, acetonitrile, propionitrile, valeronitrile, butyronitrile, and isobutyronitrile are more preferable, and chain carbonate solvents such as dimethyl carbonate, ethyl methyl carbonate, and diethyl carbonate are still more preferable. That is, the non-aqueous solvent preferably contains the chain carbonate solvent, and more preferably consists of the chain carbonate solvent alone.

**In** the disclosed production method, the water-containing sulfonylimide solution obtained in the preparing is used as a raw material, and the additive solvent does not need to be "completely" non-aqueous and may contain water. The upper limit of the water content of the additive solvent may be not more than the saturated water content, preferably 1000 ppm by mass or less, more preferably 500 ppm by mass or less.

The total amount of the additive solvent added (used) has no lower limit and may be appropriately controlled according to the type and amount of the remaining solvent in the sulfonylimide compound (1). For example, the amount is preferably 10000 g or less, more preferably 1000 g or less, yet more preferably 500 g or less, still more preferably 200 g or less, with respect to 100 g of the sulfonylimide compound (1).

The amount of the additive solvent added (used) is, for example, preferably 1 part by mass to 1000 parts by mass, more preferably 5 parts by mass to 500 parts by mass, yet more preferably 10 parts by mass to 300 parts by mass, still more preferably 30 parts by mass to 200 parts by mass, with respect to 100 parts by mass of the sulfonylimide compound (1).

### (Anionic Component)

The anionic component added to the water-containing sulfonylimide solution in the dehydrating (hereinafter also referred to as an "additive anionic component") is an acid component (hereinafter also referred to as a "specific acid component") containing a conjugate acid having an acid dissociation constant pKa (a first-step acid dissociation constant pKa1 for acids that ionize multiple times) of 0 or more and 6.5 or less (temperature: room temperature (25°C), solvent: water). The addition of the anionic component reduces the decomposition of LiFSI in the water-containing sulfonylimide solution for dehydration even at relatively high temperature (e.g., 50°C or higher) and gives good thermal stability to the solution. The composition obtained after the dehydrating contains the specific acid component, improving the thermal stability.

In the present specification, the anionic component refers to a partial structure of a specific acid component such as a specific acid that can be an anion by ion dissociation in a solution or a salt thereof, for example, an amide sulfate ion in amide sulfate described later or lithium amide sulfate described later. The value pKa of the conjugate acid refers to, for example, pKa of "HA" when the anion (A⁻) is monovalent, and the first dissociation constant pKa1 of "H₂A" when the anion (A⁻) is divalent.

The specific acid component has higher pKa (pKa1) than a sulfuric acid (pKa1 = -3) component generated by the decomposition of the sulfonylimide compound (1). Examples of the specific acid component include an amidosulfuric acid (pKa = 1) component, an acetic acid (pKa = 4.8) component, a carbonic acid (pKa1 = 6.1) component, and a phosphoric acid (pKa1 = 1.8) component (https://organicchemistrydata.org/hansreich/resources/pka/pka_data/pka-compilation-williams.pdf).

The specific acid components may be used (contained) alone, or two or more of them may be used together (may contained in combination). Specifically, the specific acid component (anionic component) is at least one selected from the group consisting of an amidosulfuric acid component, an acetic acid (carboxylic acid) component, a carbonic acid component, and a phosphoric acid component. The specific acid component (anionic component) may be at least one selected from the group consisting of a sulfonic acid component, a sulfinic acid component, a carboxylic acid component, a carbonic acid component, a phosphoric acid component, a phosphonic acid component, derivatives thereof, and salts thereof. When two or more anionic components are used in combination, two or more anionic components of the same type may be selected, or two or more anionic components of different types may be combined. The specific acid component may have any structure in the solution and may be present (contained) in an ionic form or dissolved.

### [Sulfonic Acid Component]

The sulfonic acid component refers to a compound having a sulfonic acid group (sulfo group, -SO₃H). Examples thereof include amidosulfuric acid components, heteroatom-containing alkylsulfonic acid components, and heteroatom-containing alkylene disulfonic acid components.

### [Amidosulfuric Acid Component]

Examples of the amidosulfuric acid component (amidosulfuric acid compounds, amidosulfuric acid-based compounds, and amidosulfuric acids) include amidosulfuric acid (sulfamic acid), amidosulfuric acid derivatives, and salts thereof.

The amidosulfuric acid component may have any structure, for example, a neutral structure (H₂NSO₂(OH), HN=SO(OH)₂), a zwitterion structure (H₃N⁺SO₃⁻, H₂N⁺=SO(OH)O⁻), or a structure containing both of them.

Examples of the amidosulfuric acid derivatives include N-substituted amidosulfuric acid (e.g., N-substituted sulfamic acid).

The amidosulfuric acid derivatives (and salts thereof) may be compounds represented by the general formula (2) (N-substituted amidosulfuric acid and salts thereof). Although the general formula (2) represents a compound having a neutral structure (R¹R²NSO₂(OM)), the compound may have a zwitterion structure or a structure including both of them.

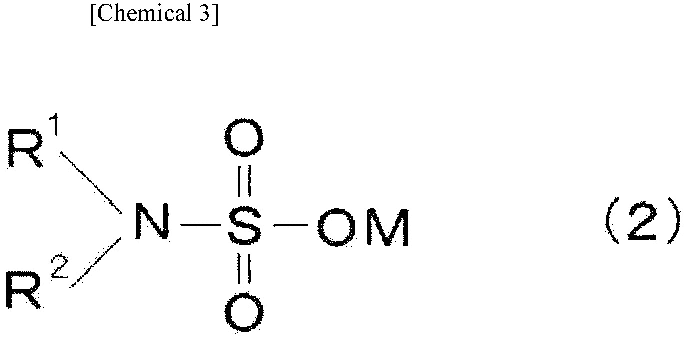

In the general formula (2), R¹ and R² each represent
- H (hydrogen atom),
- a hydroxyl group, or
- an alkyl group with 1 to 10 carbon atoms, a cycloalkyl group with 3 to 10 carbon atoms, an aryl group with 6 to 16 carbon atoms, an aralkyl group with 7 to 16 carbon atoms, or an alkanoyl group with 2 to 16 carbon atoms, each optionally having a substituent, and R¹ and R² may contain a heteroatom and form a ring structure. R¹ and R² are identical to or different from each other when representing the group other than H (when either one of R¹ or R² is H, R¹ and R² are not identical to each other (R¹ and R² do not simultaneously represent H)). M represents H (hydrogen atom) or a metal atom.

In the general formula (2), examples of the alkyl group with 1 to 10 carbon atoms include a methyl group. Examples of the cycloalkyl group with 3 to 10 carbon atoms include a cyclopropyl group. Examples of the aryl group with 6 to 16 carbon atoms include a phenyl group and a naphthyl group. Examples of the aralkyl group with 7 to 16 carbon atoms include a benzyl group and a phenethyl group. Examples of the alkanoyl group with 2 to 16 carbon atoms include a benzoyl group.

These groups may each contain a heteroatom (e.g., a nitrogen atom, an oxygen atom, a sulfur atom, and a phosphorus atom). Examples of such a group include a group in which at least one of the carbon atoms is substituted with a heteroatom, and a thiocycloalkyl group (a group corresponding to thiocycloalkane such as thiepane, thiocane, thietane, thiane, and dithiane).

In addition, examples of the substituent with which these groups are substituted include, but are not particularly limited to, a hydroxyl group, a halogen atom, an amino group, a carboxyl group, an alkoxy group, and an acyl group. These substituents may be used alone or in combination of two or more of them.

Examples of the metal atom include alkali metal atoms such as lithium, sodium, and potassium, and alkali earth metal atoms such as magnesium, calcium, and barium, and aluminum.

Specific examples of the amidosulfuric acid derivative and the salt thereof [N-substituted amidosulfuric acid and a salt thereof (or the compound represented by the formula (2))] include: N-hydroxyamidosulfuric acid; N-mono- or di-alkyl amidosulfuric acid [N-methylamidosulfuric acid, N-ethylamidosulfuric acid, N-(1-methylpropyl)amidosulfuric acid, N-(2-methylbutyl)amidosulfuric acid, N-(2,2-dimethylpropyl)amidosulfuric acid, N,N-diethylamidosulfuric acid, N-(3-hydroxypropyl)amidosulfuric acid, N-methyl-N-(2,3-dihydroxypropyl)amidosulfuric acid, N,N-bis(2-hydroxyethyl)amidosulfuric acid, N-(2,3-dihydroxypropyl)amidosulfuric acid, N-(3-methoxy-4-methylphenyl)amidosulfuric acid, N-methyl-N-(2-hydroxy-3-chloropropyl)amidosulfuric acid, N-(2-hydroxy-3-chloropropyl)amidosulfuric acid, N-ethyl-N-(2-hydroxy-3-chloropropyl)amidosulfuric acid, or the like]; N-mono- or di-cycloalkyl amidosulfuric acid (N-cyclohexylamidosulfuric acid, N,N-dicyclohexylamidosulfuric acid, or the like); N-mono- or di-aryl amidosulfuric acid [N-phenylamidosulfuric acid, N-naphthylamidosulfuric acid, N-hydroxy-N-(2-hydroxy-1-naphthyl)amidosulfuric acid, N-(4-bromophenyl)amidosulfuric acid, or the like]; N-mono- or di-aralkyl amidosulfuric acid [N-benzylamidosulfuric acid, N-(β-methylphenethyl)amidosulfuric acid, or the like]; N-alkyl-N-arylamidosulfuric acid (N-ethyl-N-phenylamidosulfuric acid, or the like), N-mono- or di-acyl amidosulfuric acid [N-benzoylamidosulfuric acid, N-(3-chloroalanyl)amidosulfuric acid, N-(3-chloro-3-methylalanyl)amidosulfuric acid, or the like]; and N-thiocycloalkylamidosulfuric acid [N-(thiepane-4-yl)amidosulfuric acid, N-thiocane-4-ylamidosulfuric acid, thiocane-5-ylamidosulfuric acid, N-thietane-3-ylamidosulfuric acid, N-1,3-dithiane-5-ylamidosulfuric acid, N-(thiane-3-yl)amidosulfuric acid, N-(thiolane-3-yl)amidosulfuric acid, or the like], and salts thereof. These amidosulfuric acid derivatives and salts thereof may be used alone or in combination of two or more of them.

The salt of the amidosulfuric acid component is not particularly limited and may be, for example, a salt containing amidosulfuric acid or an amidosulfuric acid derivative as either a base or an acid, and may usually be a salt containing amidosulfuric acid or an amidosulfuric acid derivative as an acid (a salt of amidosulfuric acid or amidosulfuric acid derivative with a base).

Specific examples of the salt include: alkali metal salts such as lithium salts, sodium salts, and potassium salts; alkali earth metal salts such as magnesium salts calcium salts, and barium salts; and metal salts such as aluminum salts. Among them, the alkali metal salts are preferable, and the lithium salts are more preferable. The salt may also be a salt corresponding to the cation of the electrolyte with which the salt is combined. For example, when a lithium salt is used as the electrolyte, a lithium salt (such as lithium amidosulfate) may be used.

The amidosulfuric acid component preferably contains at least one selected from the group consisting of amidosulfuric acid and salts thereof (alkali metal salts), amidosulfuric acid derivatives and salts thereof (alkali metal salts), more preferably contains at least one selected from the group consisting of amidosulfuric acid and alkali metal salts of amidosulfuric acid (e.g., lithium amidosulfate), and yet more preferably contains the alkali metal salt of amidosulfuric acid.

### [Heteroatom-Containing Alkylsulfonic Acid Component]

The heteroatom-containing alkylsulfonic acid component is not particularly limited, and may be a compound represented by the general formula (4):

[Chemical 4] R⁴-SO₂(OM) (4).

In the general formula (4), R⁴ represents an alkyl group with 1 to 6 carbon atoms and a heteroatom (e.g., a nitrogen atom, an oxygen atom, and a sulfur atom), and M is the same as defined above.

Specific examples of the heteroatom-containing alkylsulfonic acid component include isethionic acid (R⁴: C₂H₄OH, pKa: 1.4), 3-hydroxypropanesulfonic acid (R⁴: C₃H₆OH, pKa: 1.7), taurin (2-aminoethanesulfonic acid, R⁴: C₂H₄NH₂, pKa: 0.5), 2-mercaptoethanesulfonic acid (R⁴: C₂H₄SH, pKa: 1.5), and salts thereof. The heteroatom-containing alkylsulfonic acid component may be used alone or in combination of two or more of them.

Among the salts of the heteroatom-containing alkylsulfonic acid component, alkali metal salts are preferable, and lithium salts are more preferable. The salt may also be a salt corresponding to the cation of the electrolyte with which the salt is combined. For example, when a lithium salt is used as the electrolyte, a lithium salt (heteroatom-containing lithium alkyl sulfonate) may be used.

### [Heteroatom-Containing Alkylene Disulfonic Acid Component]

The heteroatom-containing alkylene disulfonic acid component is not particularly limited, and may be a compound represented by the general formula (5):

[Chemical 5] (MO)SO₂-R⁵-SO₂(OM) (5).

In the general formula (5), R⁵ represents an alkylene group with 1 to 6 carbon atoms and a heteroatom (e.g., a nitrogen atom, an oxygen atom, and a sulfur atom), and M is the same as defined above.

Specific examples of the heteroatom-containing alkylene disulfonic acid components include a compound (pKa: 0.2) represented by the general formula (5a):

[Chemical 6] (HO)SO₂-CH₂SCH₂-SO₂(OH) (5a),

a compound (pKa: 0.2) represented by the general formula (5b):

[Chemical 7] (HO)SO₂-CH₂OCH₂-SO₂(OH) (5b), and

salts thereof. The heteroatom-containing alkylene disulfonic acid components may be used alone or in combination of two or more of them.

Among the salts of the heteroatom-containing alkylene disulfonic acid component, alkali metal salts are preferable, and lithium salts are more preferable. The salt may also be a salt corresponding to the cation of the electrolyte with which the salt is combined. For example, when a lithium salt is used as the electrolyte, a lithium salt (heteroatom-containing lithium alkylene disulfonate) may be used.

### [Sulfonic Acid Component]

The sulfinic acid component refers to a compound having a -SO₂H group, and may be, for example, a compound represented by the general formula (6):

[Chemical 8] R⁶-SO(OM) (6).

In the general formula (6), R⁶ represents a hydroxy group, or an alkyl group with 1 to 6 carbon atoms (halogenated alkyl group) or an aryl group with 6 to 16 carbon atoms, each optionally having a halogen atom as a substituent. Examples of the aryl group with 6 to 16 carbon atoms include a phenyl group, a tolyl group, a xylyl group, and a naphthyl group. M is the same as defined above.

Specific examples of the sulfinic acid component include sulfurous acid (R⁶: OH, pKa: 1.9), p-toluenesulfinic acid (R⁶: (CH₃)C₆H₃ (p-tolyl group), pKa: 2.0), trifluoromethanesulfinic acid (R⁶: CF₃, pKa: 2.1), and salts thereof. The sulfinic acid components may be used alone or in combination of two or more of them.

Among the salts of the sulfinic acid component, alkali metal salts are preferable, and lithium salts are more preferable. The salt may also be a salt corresponding to the cation of the electrolyte with which the salt is combined. For example, when a lithium salt is used as the electrolyte, a lithium salt (e.g., lithium sulfinate) may be used.

### [Acetic Acid (Carboxylic Acid) Component]

Carboxylic acid as a typical acetic acid component and salts thereof may be compounds represented by the general formula (3):

[Chemical 9] R³COOM (3)

In the general formula (3), R³ represents H (hydrogen atom), or an alkyl group with 1 to 10 carbon atoms, a cycloalkyl group with 3 to 10 carbon atoms, an aryl group with 6 to 16 carbon atoms, an aralkyl group with 7 to 16 carbon atoms, or an alkanoyl group with 2 to 16 carbon atoms, each optionally having a substituent, and may contain a heteroatom, and M is the same as defined above.

**In** the general formula (3), examples of the alkyl group with 1 to 10 carbon atoms include a methyl group. Examples of the cycloalkyl group with 3 to 10 carbon atoms include a cyclopropyl group. Examples of the aryl group with 6 to 16 carbon atoms include a phenyl group and a naphthyl group. Examples of the aralkyl group with 7 to 16 carbon atoms include a benzyl group and a phenethyl group. Examples of the alkanoyl group with 2 to 16 carbon atoms include a benzoyl group.

These groups may each contain a heteroatom (e.g., a nitrogen atom, an oxygen atom, a sulfur atom, and a phosphorus atom). Examples of such a group include a group in which at least one of the carbon atoms is substituted with a heteroatom, and a thiocycloalkyl group (a group corresponding to thiocycloalkane such as thiepane, thiocane, thietane, thiane, and dithiane).

**In** addition, examples of the substituent with which these groups are substituted include, but are not particularly limited to, a hydroxyl group, a halogen atom, an amino group, a carboxyl group, an alkoxy group, and an acyl group. These substituents may be used alone or in combination of two or more of them.

Specific examples of carboxylic acid and salts thereof (or the compound represented by the general formula (3)) include saturated fatty acids (such as formic acid, acetic acid, propionic acid, and butyric acid), unsaturated fatty acids (such as linolenic acid, linoleic acid, and oleic acid), hydroxy acids (such as lactic acid, citric acid, and salicylic acid), dicarboxylic acids (such as oxalic acid, tartaric acid, phthalic acid, itaconic acid, and maleic acid), amino acids (such as glycine and alanine), and salts thereof. More specifically, examples of alkyl monocarboxylic acid and salts thereof include acetic acid, trifluoroacetic acid, and salts thereof. Examples of alkyl dicarboxylic acid and salts thereof include malonic acid, maleic acid, succinic acid, and salts thereof. Examples of aromatic carboxylic acid and salts thereof include benzoic acid, salicylic acid, and salts thereof. Examples of aromatic dicarboxylic acid and salts thereof include phthalic acid, maleic acid, and salts thereof. These carboxylic acids and the salts thereof may be used alone or in combination of two or more.

Specific examples of the salts include alkali metal salts (lithium salts, sodium salts, and potassium salts), alkali earth metal salts (magnesium salts, calcium salts, and barium salts), and aluminum salts. Among them, the alkali metal salts are preferable, and the lithium salts are more preferable. The salt may also be a salt corresponding to the cation of the electrolyte with which the salt is combined. For example, when a lithium salt is used as the electrolyte, a lithium salt (e.g., lithium acetate) may be used.

### [Carbonic Acid Component]

The carbonic acid component is not particularly limited, and examples thereof include carbonate and bicarbonate. The carbonic acid components may be used alone or in combination of two or more of them.

Specific examples of the salt include alkali metal salts (lithium salts, sodium salts, potassium salts, rubidium salts, and cesium salts) and alkali earth metal salts (beryllium salts, magnesium salts, calcium salts, strontium salts, and barium salts). Among them, the alkali metal salts are preferable, and the lithium salts are more preferable. The salt may also be a salt corresponding to the cation of the electrolyte with which the salt is combined. For example, when a lithium salt is used as the electrolyte, a lithium salt (e.g., lithium carbonate) may be used.

### [Phosphoric Acid Component]

The phosphoric acid component is not particularly limited, and examples thereof include various phosphates such as phosphate, hydrogen phosphate, and dihydrogen phosphate, and a phosphoric acid ester component. The phosphoric acid components may be used alone or in combination of two or more of them.

Specific examples of the salt include alkali metal salts (lithium salts, sodium salts, potassium salts, rubidium salts, and cesium salts) and alkali earth metal salts (beryllium salts, magnesium salts, calcium salts, strontium salts, and barium salts). Among them, the alkali metal salts are preferable, and the lithium salts are more preferable. The salt may also be a salt corresponding to the cation of the electrolyte with which the salt is combined. For example, when a lithium salt is used as the electrolyte, a lithium salt (e.g., lithium phosphate) may be used.

### [Phosphoric Acid Ester Component]

The phosphoric acid ester component is not particularly limited, and examples thereof include a phosphoric monoester component represented by the general formula (7):

[Chemical 10] R⁷O-PO(OM)₂ (7),

and
a phosphoric monoester component represented by the general formula (8):

[Chemical 11] (R⁷O)₂-PO(OM) (8).

In the general formulae (7) and (8), R⁷ represents an alkyl group with 1 to 6 carbon atoms or an aryl group with 6 to 16 carbon atoms (halogenated alkyl group), each optionally having a halogen atom as a substituent. Examples of the aryl group with 6 to 16 carbon atoms include a phenyl group, a tolyl group, a xylyl group, and a naphthyl group. In the general formula (8), two R⁷'s may form a ring structure. M is the same as defined above. In the general formula (7), two M's may be identical to (both may be H (hydrogen atom) or a metal atom) or different from each other or may be different.

Specific examples of the phosphoric monoester component include monomethyl phosphate (R⁷: methyl group, pKa: 1.8) and salts thereof. Specific examples of the phosphoric diester component include a compound represented by the formula (8a):

[Chemical 12] (CF₃O)₂-PO(OH) (8a)

(R⁷: CF₃, pKa: 0.6), a compound represented by the formula (8b):

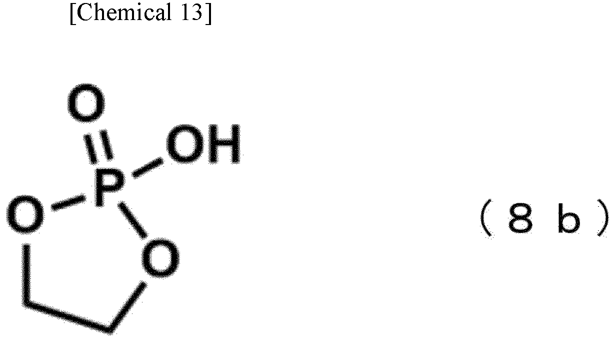

(R⁷: CH₂, pKa: 1.2), and salts thereof. These phosphoric acid ester components may be used alone or in combination of two or more of them.

Among the salts of the phosphoric acid ester component, alkali metal salts are preferable, and lithium salts are more preferable. The salt may also be a salt corresponding to the cation of the electrolyte with which the salt is combined. For example, when a lithium salt is used as the electrolyte, a lithium salt (e.g., lithium phosphate) may be used.

### [Phosphonic Acid Component]

The phosphonic acid component is not particularly limited, and may be a compound represented by the general formula (9):

[Chemical 14] R⁸-PO(OM)₂ (9).

In the general formula (9), R⁸ represents an alkyl group with 1 to 6 carbon atoms or an aryl group with 6 to 16 carbon atoms (halogenated alkyl group), each optionally having a halogen atom as a substituent, a halogen atom, or a hydrogen atom. Examples of the aryl group with 6 to 16 carbon atoms include a phenyl group, a tolyl group, a xylyl group, and a naphthyl group. M is the same as defined above. Two M's may be identical to each other (both may be H (hydrogen atom) or a metal atom) or different from each other.

Specific examples of the phosphonic acid component include methylphosphonic acid (R⁸: methyl group, pKa: 2.4), trifluoromethanesulfonic acid (R⁸: CF₃, pKa: 1.2), phosphorous acid/phosphite (R⁸: H, pKa: 1.3), and salts thereof. Among these salts, alkali metal salts are preferable, and lithium salts are more preferable. The salt may also be a salt corresponding to the cation of the electrolyte with which the salt is combined. For example, when a lithium salt is used as the electrolyte, a lithium salt (e.g., lithium phosphonate) may be used. The phosphonic acid components may be used alone or in combination of two or more of them.

Among the salts of the phosphonic acid component, alkali metal salts are preferable, and lithium salts are more preferable. The salt may also be a salt corresponding to the cation of the electrolyte with which the salt is combined. For example, when a lithium salt is used as the electrolyte, a lithium salt (e.g., lithium phosphonate) may be used.

Among the additive anionic components, the sulfonic acid component, the carbonic acid component, and the phosphoric acid component are preferable, and the sulfonic acid component and the carbonic acid component are more preferable, in view of improving the thermal stability of the water-containing sulfonylimide solution for dehydration and improving the dehydration efficiency. Among the sulfonic acid components, the amidosulfuric acid component and the heteroatom-containing alkylsulfonic acid component are preferable. When two or more anionic components are used, a combination of the sulfonic acid component (the amidosulfuric acid component or the heteroatom-containing alkylsulfonic acid component) and the carbonic acid component is preferable, and a combination of the amidosulfuric acid component and the carbonic acid component is more preferable.

The addition amount of the additive anionic component (specific acid component), or the total addition amount of two or more anionic components that are used in combination, is preferably 1000 ppm by mass or more, more preferably 2000 ppm by mass or more, yet more preferably 4000 ppm by mass or more with respect to the electrolyte (sulfonylimide compound (1)), in view of improving the thermal stability of the water-containing sulfonylimide solution for dehydration and improving the dehydration efficiency. The upper limit of the addition amount is preferably 30000 ppm by mass or less, more preferably 25000 ppm by mass or less, yet more preferably 10000 ppm by mass or less. The addition amount of the additive anionic component refers to the amount of the additive anionic component intentionally added to the water-containing sulfonylimide solution in the dehydrating. That is, the dehydrating may include adding the additive anionic component at the above-described concentration (e.g., at a concentration of 1000 ppm by mass or more with respect to the electrolyte) to the water-containing sulfonylimide solution or the water-containing sulfonylimide solution for dehydration.

**In** the dehydrating, the concentration of the anionic component (specific acid component) in the water-containing sulfonylimide solution for dehydration (the total concentration when two or more anionic components are together) is preferably 4000 ppm by mass or more, more preferably 5000 ppm by mass or more, much more preferably 8000 ppm by mass or more, yet more preferably 10000 ppm by mass or more, still more preferably 20000 ppm by mass or more, with respect to the electrolyte. **In** the dehydrating, the concentration of the anionic component is not the amount of the anionic component added but the amount of the anionic component present (the content of the anionic component contained in the water-containing sulfonylimide solution for dehydration).

When the specific acid component is a salt (a salt of an acid or a derivative thereof), the addition amount may be a ratio in terms of a non-salt form (or a free form, e.g., an acid or an acid derivative). The salts of the above-described acids and derivatives thereof may be commercially available products or manufactured products.

### (Dehydration Method)

The dehydration of the water-containing sulfonylimide solution is performed by azeotropic distillation. distillation.

For example, the non-aqueous solvent may be continuously added in the same amount as a portion to be removed of a distillate generated by azeotropic distillation of water in the water-containing sulfonylimide solution for dehydration and the non-aqueous solvent added, or the distillate may be phase-separated to remove an aqueous phase and reflux an organic phase (a phase containing the non-aqueous solvent). For the reflux of the organic phase, a reflux liquid may be returned to a fractionating tube (a distillation column or a column) or to a distillation bottom liquid containing the water-containing sulfonylimide solution for dehydration. Alternatively, the reflux liquid may be dehydrated separately, and then returned to a distillation apparatus (which may be either the fractionating tube or the distillation bottom liquid). Examples of the dehydration method further include use of a dehydrating agent such as a molecular sieve.

The phase separation of the distillate may be performed at any temperature as long as the temperature is appropriately controlled depending on the non-aqueous solvent used. For example, the phase separation may be performed in a temperature range of -20°C to 100°C, preferably 0°C to 60°C, and more preferably 10°C to 40°C.

Further, in the distillate obtained by azeotropic distillation, the positions of the organic phase to be refluxed and the aqueous phase to be removed may vary depending on the type of the non-aqueous solvent used. For example, the organic phase comes to the top when butyl acetate is used as the non-aqueous solvent and goes to the bottom when dimethyl carbonate is used. The distillation apparatus may be appropriately selected according to the position.

Further, the aqueous phase to be disposed outside the system contains the non-aqueous solvent in no small quantities. In view of economy and reuse of resources, recovering the non-aqueous solvent from the disposed aqueous phase for reuse is highly valuable. Thus, the disclosed production method may include recovering the non-aqueous solvent from the disposed aqueous phase after the dehydrating. The non-aqueous solvent may be recovered from the disposed aqueous phase by any method, for example, by distillation of the disposed aqueous phase.

The above-described process dehydrates the water-containing sulfonylimide solution for dehydration to obtain a composition containing the added non-aqueous solvent and anionic component. Thus, the dehydrating can be said to be replacing water in the water-containing sulfonylimide solution with the non-aqueous solvent.

The dehydrating can be performed either under normal pressure or reduced pressure (or under normal pressure and reduced pressure combined during the dehydrating). However, the dehydration is preferably performed under reduced pressure (vacuum dehydration) in view of reducing thermal decomposition of the sulfonylimide compound (1). The degree of decompression is not particularly limited and may be appropriately controlled according to the concentration of the sulfonylimide compound (1) and the type and amount of the non-aqueous solvent. For example, the pressure is preferably reduced to 200 kPa or less, more preferably 40 kPa or less, yet more preferably 15 kPa or less, particularly preferably 10 kPa or less. The lower limit of the degree of decompression is more than 5 kPa.

In addition, the degree of decompression in the dehydrating may be constant during the dehydrating or may vary within the above-mentioned range.

The heating temperature during the dehydrating (the internal temperature of the container that varies during the dehydration) is not particularly limited and may be appropriately controlled according to the degree of decompression and the type and amount of the non-aqueous solvent. For example, the temperature is preferably 20°C to 110°C, more preferably 30°C to 100°C, in view of improving the dehydration efficiency. According to the disclosed production method, the thermal stability of the water-containing sulfonylimide solution for dehydration is improved by the addition of the anionic component. Thus, hydrolysis of the sulfonylimide compound (1) is reduced although the solution is heated to 50°C or higher during the dehydration. **In** other words, the lower limit of the heating temperature may be set to 50°C or higher to improve the dehydration efficiency.

The heating temperature in the dehydrating may be constant during the dehydrating or may vary within the above-mentioned range. For example, the temperature may be gradually increased within the above range.

The heating may be performed by any method, for example, by a method of raising the internal temperature of the container (corresponding to the heating temperature) by raising the temperature of an oil bath in which the container such as a flask charged with the water-containing sulfonylimide solution for dehydration is immersed.

The temperature difference (Δt) between the internal temperature of the flask and the oil bath temperature during the dehydration is preferably 5°C to 40°C, more preferably 10°C to 40°C, yet more preferably 20°C to 40°C, and still more preferably 30°C to 40°C, in view of improving the dehydration efficiency.

Time taken by the dehydrating is not particularly limited and may be appropriately controlled according to the degree of decompression, the heating temperature, and the type and amount of the non-aqueous solvent. For example, the dehydrating is preferably performed for 1 hour to 40 hours, more preferably 2 hours to 35 hours, yet more preferably 5 hours to 30 hours.

Any apparatus that can perform decompression and/or heating can be appropriately selected for the dehydrating according to the amount of the solution, the degree of decompression, and the heating temperature. For example, a tank reactor and a tank reactor capable of reducing the pressure can be used.

### (Dehydration Efficiency)

In the method for producing a composition of the present embodiment, the dehydration efficiency in the dehydrating is defined by the dehydration efficiency determined by the method for quantifying the dehydration efficiency described below and the method described in Examples. The dehydration efficiency in the dehydrating is preferably 80 or less, more preferably 60 or less, yet more preferably 50 or less, still more preferably 30 or less.

Examples of the method for quantifying the dehydration efficiency include a method of quantifying the dehydration efficiency using a value obtained by dividing "the total amount (total weight) of the non-aqueous solvent required to reach a target water content of the composition (e.g., 50 ppm by mass or less)" by "the weight of the electrolyte" as described in the following mathematical equation (1). The "total amount of the non-aqueous solvent" in the mathematical equation (1) refers to the total amount of the non-aqueous solvent (additive solvent) added to the water-containing sulfonylimide solution in the dehydrating. The "total amount of the non-aqueous solvent" may be the total amount of the solvent added to the system during simple distillation, or may be calculated as the total amount of vapor evaporated from a reactor/distillation can (distillation apparatus) during continuous distillation (hereinafter also referred to as the "total amount of ascending vapor"). The "weight of the electrolyte" in the mathematical equation (1) refers to the weight of the electrolyte used in the preparing (the weight of the electrolyte contained in the water-containing sulfonylimide solution). When two or more electrolytes are used, the "weight of the electrolyte" is the total weight of the electrolytes. - Dehydration efficiency = "the total amount of the non-aqueous solvent used to reach the target water content of the composition" / "the weight of the electrolyte" (1)

### <Other Processes>

The method for producing the composition may include other processes as long as the object of the present invention is not impaired. Examples of the other processes include filtration, column chromatography, treatment with activated carbon, and treatment with a molecular sieve, in addition to the recovering described above.

The production method of the present embodiment includes a process (operation) of preparing a water-containing sulfonylimide solution containing a sulfonylimide compound (1) and water and/or a non-aqueous solvent (electrolyte solution solvent) and dehydrating a water-containing sulfonylimide solution for dehydration obtained by adding an anionic component and, if necessary, a non-aqueous solvent, to the solution to produce a composition containing the sulfonylimide compound (1) as an electrolyte, the non-aqueous solvent, and the anionic component. This production method gives high thermal stability to the water-containing sulfonylimide solution for dehydration by the addition of the anionic component. Thus, the dehydration can be performed at relatively high temperature (e.g., 50°C or higher), improving the dehydration efficiency and the productivity. **In** addition, the obtained composition has not only a sufficiently low water content but also excellent thermal stability.

### [Composition]

### (Electrolyte)

The content of the sulfonylimide compound (1) (the total content when two or more sulfonylimide compounds are used in combination) in the composition is preferably 30 mass% or more, more preferably 35 mass% or more (with respect to 100 mass% of the total amount of the components contained in the composition) in view of applying the composition to a wide range of electrolyte solution compositions. The upper limit of the content is preferably 60 mass% or less, more preferably 55 mass% or less, in view of improving the storage stability of the composition even at high temperatures.

The composition only has to include the sulfonylimide compound (1), but may also include another electrolyte (an electrolyte other than the sulfonylimide compound (1)). The other electrolyte may be mixed with the composition or may be mixed with the water-containing sulfonylimide solution and/or the water-containing sulfonylimide solution for dehydration in production of the composition. Examples of the other electrolyte include an imide salt and a non-imide salt.

Examples of the imide salt include another fluorine-containing sulfonylimide salt (hereinafter referred to as "other sulfonylimide compound") that is different from the sulfonylimide compound (1). Examples of the other sulfonylimide compound include: lithium bis(trifluoromethylsulfonyl)imide (LiN(CF₃SO₂)₂, hereinafter also referred to as "LiTFSI"); lithium bis(pentafluoroethylsulfonyl)imide; lithium bis(heptafluoropropylsulfonyl)imide; and a non-lithium salt of fluorine-containing sulfonylimide listed above as the sulfonylimide compound (1) (e.g., a salt obtained by substituting lithium (ion) in the sulfonylimide compound (1) with a cation other than the lithium ion). Examples of the salt substituted with a cation other than the lithium ion include: an alkali metal salt such as a sodium salt, a potassium salt, a rubidium salt, and a cesium salt; an alkali earth metal salt such as a beryllium salt, a magnesium salt, a calcium salt, a strontium salt, and a barium salt; an aluminum salt; an ammonium salt; and a phosphonium salt. The other sulfonylimide compounds may be used alone or in combination of two or more of them. Alternatively, as the other sulfonylimide compound, a commercially available product may be used, or one obtained by synthesis using a known method may also be used.

Examples of the non-imide salt include a salt of a non-imide-based anion and a cation (lithium ions and the cations shown above as examples). Examples of the non-imide salt include: lithium salts such as fluorophosphoric acid compounds including LiPF₆, LiPF₃(CF₃)₃, LiPF₃(C₂F₅)₃, LiPF₃(C₃F7)₃, and LiPF₃(C₄F₉)₃, fluoroboric acid compounds including LiBF₄, LiBF(CF₃)₃, LiBF(C₂F₅)₃, and LiBF(C₃F₇)₃, lithium hexafluoroarsenate (LiAsF₆), LiSbF₆, LiClO₄, LiSCN, LiAlF₄, CF₃SO₃Li, LiC[(CF₃SO₂)₃], LiN(NO₂), and LiN[(CN)₂]; and non-lithium salts such as salts obtained by substituting lithium (ions) in these lithium salts with the above-listed cations (e.g., NaBF₄, NaPF₆, and NaPF₃(CF₃)₃). These non-imide salts may be used alone or in combination of two or more of them. Alternatively, as the non-imide salt, a commercially available product may be used, or one obtained by synthesis using a known method may also be used.

These electrolytes (the sulfonylimide compound (1) and the other electrolytes) may be present (contained) in the ionic form in the composition.

### (Non-Aqueous Solvent)

The non-aqueous solvent preferably contains a carbonate solvent, more preferably contains a chain carbonate solvent, particularly preferably contains a chain carbonate solvent.

The ratio of the carbonate solvent (preferably the chain carbonate solvent) to the entire non-aqueous solvent is not particularly limited, and may be 10 vol% or more, 20 vol% or more, 30 vol% or more, 40 vol% or more, 50 vol% or more, 60 vol% or more, 70 vol% or more, 80 vol% or more, 90 vol% or more, 95 vol% or more, 99 vol% or more, or 100 vol% (substantially the carbonate solvent alone (preferably substantially the chain carbonate solvent alone)).

### (Anionic Component)

The concentration of the anionic component (specific acid component) is 10000 ppm by mass (1 mass%) or less with respect to the electrolyte (sulfonylimide compound (1)). Specifically, the concentration of the anionic component (specific acid component) is preferably 50 ppm by mass or more, more preferably 60 ppm by mass or more, with respect to the electrolyte (sulfonylimide compound (1)) in view of improving the storage stability of the composition at high temperature. The upper limit of the concentration is 10000 ppm by mass or less, preferably 8000 ppm by mass or less, more preferably 6000 ppm by mass or less, yet more preferably 4000 ppm by mass or less, still more preferably 2000 ppm by mass or less. When the carbonate solvent contained in the non-aqueous solvent consists of the chain carbonate solvent alone, or the non-aqueous solvent itself consists of the chain carbonate solvent alone, the storage stability of the composition at high temperature is improved even when the concentration of the specific acid component is relatively low. In this case, the upper limit of the concentration of the specific acid component is preferably 1000 ppm by mass or less, more preferably 500 ppm by mass or less, yet more preferably 400 ppm by mass or less.

When the specific acid component is a salt (a salt of an acid or a derivative thereof), the concentration may be a ratio in terms of a non-salt form (or a free form, e.g., an acid or an acid derivative).

### (Additive)

The composition may contain an additive for improving various characteristics of the lithium ion secondary battery. The additive may be mixed with the composition or may be mixed with the water-containing sulfonylimide solution and/or the water-containing sulfonylimide solution for dehydration in production of the composition. Examples of the additive include: carboxylic anhydrides such as succinic anhydride, glutaric anhydride, maleic anhydride, citraconic anhydride, glutaconic anhydride, itaconic anhydride, diglycolic anhydride, cyclohexane dicarboxylic anhydride, cyclopentanetetracarboxylic dianhydride, and phenylsuccinic anhydride; sulfur-containing compounds such as ethylene sulfite, 1,3-propane sultone, 1,4-butane sultone, methyl methanesulfonate, busulfan, sulfolane, sulfolen, dimethyl sulfone, tetramethylthiuram monosulfide, and trimethylene glycol sulfate; nitrogen-containing compounds such as 1-methyl-2-pyrrolidinone, 1-methyl-2-piperidone, 3-methyl-2-oxazolidinone, 1,3-dimethyl-2-imidazolidinone, and N-methylsuccinimide; saturated hydrocarbon compounds such as heptane, octane, and cycloheptane; carbonate compounds such as vinylene carbonate, fluoroethylene carbonate (FEC), trifluoropropylene carbonate, phenylethylene carbonate, and erythritan carbonate; sulfamic acid (amidosulfuric acid, H₃NSO₃); sulfamate salts (alkali metal salts such as lithium salts, sodium salts, and potassium salts; alkali earth metal salts such as calcium salts, strontium salts, and barium salts; other metal salts such as manganese salts, copper salts, zinc salts, iron salts, cobalt salts, and nickel salts; ammonium salts; and guanidine salts); fluorosulfonic acid compounds such as lithium fluorosulfonate (LiFSO₃), sodium fluorosulfonate (NaFSO₃), potassium fluorosulfonate (KFSO₃), and magnesium fluorosulfonate (Mg(FSO₃)₂); fluorophosphoric acid compounds such as lithium monofluorophosphate (Li₂PO₃F) and lithium difluorophosphate (LiPO₂F₂); and fluoro oxalate compounds such as lithium salts having an oxalate skeleton such as lithium bis(oxalato)borate (LiBOB), lithium difluoro(oxalato)borate (LiDFOB), lithium difluoro(oxalato)phosphate (LIDFOP), lithium tetrafluoro(oxalato)phosphate (LITFOP), lithium difluorobis(oxalato)phosphate (LiDFBOP), and lithium tris(oxalato)phosphate. These additives may be used alone or in combination of two or more of them.

### (Moisture Concentration)

The water content (moisture concentration, water content) of the composition is preferably 10000 ppm by mass or less, more preferably 3000 ppm by mass or less, 1000 ppm by mass or less, 900 ppm by mass or less, 800 ppm by mass or less, 700 ppm by mass or less, 600 ppm by mass or less, 500 ppm by mass or less, 400 ppm by mass or less, 300 ppm by mass or less, 200 ppm by mass or less, 100 ppm by mass or less, or 50 ppm by mass or less, in view of improving the storage stability of the composition. The water content is preferably as low as possible, and may be equal to or less than the detection limit or substantially none (0 ppm by mass). The moisture concentration can be measured by a method described in Examples below, for example, a method using a Karl Fischer titrator.

The composition may contain water at a concentration of, for example, 0.1 ppm by mass or more, 0.3 ppm by mass or more, 0.5 ppm by mass or more, 0.7 ppm by mass or more, 0.8 ppm by mass or more, 1 ppm by mass or more, 1.5 ppm by mass or more, 2 ppm by mass or more, 3 ppm by mass or more, 5 ppm by mass or more, 7 ppm by mass or more, or 10 ppm by mass or more.

### (Impurity Concentration)

The concentration of each of the anionic impurities such as fluoride ions (F⁻), chloride ions (Cl⁻), sulfate ions (SO₄²⁻) and FSO³⁻ (fluorosulfonate ions) in the composition is preferably 300 ppm by mass or less, more preferably 200 ppm by mass or less, yet more preferably 100 ppm by mass or less, still more preferably 80 ppm by mass or less, even more preferably 60 ppm by mass or less, particularly preferably 40 ppm by mass or less, in view of reducing the decomposition of the sulfonylimide compound (1). The concentration of each of the anionic impurities is preferably as low as possible, and may be equal to or lower than the detection limit or substantially none (0 ppm by mass). The concentration of each anionic impurity can be measured by a method described in Examples below, for example, ion chromatography or NMR.

The composition described above contains the electrolyte, the solvent, and the anionic component, and thus, is a solution (liquid) composition. The liquid composition may be used as a non-aqueous electrolyte solution or as a raw material of the non-aqueous electrolyte solution (an electrolyte solution or an electrolyte solution material).

### [Non-Aqueous Electrolyte Solution]

The non-aqueous electrolyte solution of the present embodiment contains the composition obtained by the production method of the present embodiment. Specifically, the non-aqueous electrolyte solution is prepared using the composition. For the non-aqueous electrolyte solution, the composition may be used as it is or may be diluted by mixing the non-aqueous solvent described above (electrolyte solution solvent) with the composition. Examples of the electrolyte solution solvent include a carbonate solvent and other non-aqueous solvents. The solvent mixed with the composition may be the same as or different from the solvent in the composition. As described above, the non-aqueous electrolyte solution may contain the composition alone (consist of the composition alone), may optionally contain the above-described electrolyte or solvent, or may contain the above-described additive within a range with no actual damage. It should be noted that all the matters described in terms of the production method and the obtained composition are also applied to the non-aqueous electrolyte solution.

### EXAMPLES

The present disclosure will be described below by way of examples. The present disclosure is not limited to the following Examples.

### «Synthesis Example 1 (Synthesis of Aqueous LiFSI Solution)»

To a slurry obtained by cooling a mixture of 120 g of lithium carbonate (Li₂CO₃) and 476 g of water in an ice bath, 484 g of bis(fluorosulfonyl)imide (HFSI, manufactured by NIPPON SHOKUBAI CO., LTD., HFSI purity: 99.5 mass%, impurities: 0.03 mass% FSO₃H and 0.50 mass% FSO₂NH₂) was added dropwise over 45 minutes. The mixture was stirred at the same temperature for an hour and then filtered with Kiriyama filter paper No. 5C to obtain 1000 g of an aqueous LiFSI solution containing lithium bis(fluorosulfonyl)imide (hereinafter referred to as "LiFSI"). The composition of the aqueous LiFSI solution (concentrations of the components) and the concentrations of the anionic impurities with respect to the electrolyte were measured by the method described later. The results are shown below.
- Composition of the solution, LiFSI: 50.1 mass%, H₂O: 49.9 mass%
- Concentrations of anionic impurities, F⁻: 12 ppm by mass, Cl⁻: lower limit of quantification or less, SO₄²⁻: 54 ppm by mass, FSO³⁻: 146 ppm by mass
- Anionic component, H₂NSO₃Li (H₂LiNO₃S, lithium amidesulfate): 3671 ppm by mass

The lower limit of quantification is, for example, 5 ppm by mass for F⁻, Cl⁻, and SO₄²⁻, and 10 ppm by mass for H₂NSO₃Li. These lower limits of quantification refer to the concentrations in a solution and do not refer to the concentrations with respect to the electrolyte.

### [Quantification of LiFSI Concentration]

The concentration of LiFSI in the aqueous LiFSI solution was measured by ¹⁹F-NMR. For the ¹⁹F-NMR measurement, a system "Unity Plus-400" manufactured by Varian Inc. (internal reference material: trifluorotoluene, the number of measurements: 64) was used.

### [Measurement of Water Content]

The water content (moisture concentration) of the water-containing LiFSI solution was measured using a Karl Fischer Titrator AQ-2000 (manufactured by HIRANUMA Co., Ltd.), with Aqualyte RS-A (manufactured by HIRANUMA Co., Ltd.) as a generator solution and Aqualyte CN (manufactured by HIRANUMA Co., Ltd.) as a counter solution.

### [Measurement by Ion Chromatography]

The water-containing LiFSI solution was diluted 100-fold with ultrapure water (more than 18.2 Ω·cm) to prepare a measurement solution, and the concentrations of H₂NSO₃Li (anionic component), anion impurities (such as F⁻, Cl⁻, SO₄²⁻, and FSO³⁻), and other impurities (such as FSO₂NH₂) contained in the water-containing LiFSI solution were measured using an ion chromatography system ICS-3000 (manufactured by Nippon Dionex K. K.). The measurement was performed under the following conditions.

### (Conditions of Measurement by Ion Chromatography)

- Separation mode: Ion exchange
- Eluent: 7 mM to 18mM KOH aqueous solution
- Detector: Electrical conductivity detector
- Column: Anion analysis column Ion PAC AS-17C (manufactured by Nippon Dionex K. K.)

### «Synthesis Example 2 (Synthesis of Aqueous LiFSI Solution)»

To a slurry obtained by cooling a mixture of 18.5 g of lithium carbonate and 16.4 g of water in an ice bath, 70.1 g of HFSI (manufactured by NIPPON SHOKUBAI CO., LTD., HFSI purity: 99.5 mass%, impurities: 0.03 mass% FSO₃H and 0.50 mass% FSO₂NH₂) was added dropwise over 48 minutes. The mixture was stirred at the same temperature for five hours and then filtered with Kiriyama filter paper No. 5C to obtain 83.3 g of an aqueous LiFSI solution (LiFSI/H₂O). The composition of the aqueous LiFSI solution and the concentrations of the anionic impurities with respect to the electrolyte were measured in the same manner as described above. The results are shown below.
- Composition of the solution, LiFSI: 79.1 mass%, H₂O: 20.9 mass%
- Concentrations of anionic impurities, F⁻: 17 ppm by mass, Cl⁻ and SO₄²⁻: lower limit of quantification or less, FSO³⁻: 56 ppm by mass
- Anionic component, H₂NSO₃Li: 6109 ppm by mass

### «Synthesis Example 3 (Synthesis of Water-containing LiFSI/DMC Solution)»

To a slurry obtained by cooling a mixture of 12.8 g of lithium carbonate and 60.7 g of dimethyl carbonate (DMC) to 10°C, 60.1 g of HFSI (manufactured by NIPPON SHOKUBAI CO., LTD., HFSI purity: 99.5 mass%, impurities: 0.01 mass% FSO₃H and 0.45 mass% FSO₂NH₂) was added dropwise over 45 minutes. The mixture was stirred at the same temperature for two hours. The mixture was heated to room temperature and stirred for another one hour to complete the reaction, and filtered with Kiriyama filter paper No. 5C to obtain 123.9 g of water-containing LiFSI/DMC solution. The composition of the water-containing LiFSI/DMC solution, the concentrations of the anionic impurities with respect to the electrolyte, and the concentration of other impurity with respect to the electrolyte were measured in the same manner as described above. The results are shown below.
- Composition of the solution, LiFSI: 50.1 mass%, H₂O: 2.5 mass%, DMC concentration: 46.9 mass%
- Concentrations of anionic impurities, F⁻: 944 ppm by mass, Cl⁻ and SO₄²⁻: lower limit of quantification or less
- Anionic component, H₂NSO₃Li: 798 ppm by mass
- Concentration of other impurity, FSO₂NH₂: 0.40 mass%

### «Synthesis Example 4 (Synthesis of Water-containing LiFSI/EMC Solution)»

To a slurry obtained by cooling a mixture of 6.5 g of lithium carbonate and 44.9 g of ethyl methyl carbonate (EMC) to 10°C, 29.9 g of HFSI (manufactured by NIPPON SHOKUBAI CO., LTD., HFSI purity: 99.5 mass%, impurities: 0.01 mass% FSO₃H and 0.45 mass% FSO₂NH₂) was added dropwise over 26 minutes. The mixture was stirred at the same temperature for four hours. The mixture was heated to room temperature and stirred for another two hours to complete the reaction, and filtered with Kiriyama filter paper No. 5C to obtain 75.1 g of water-containing LiFSI/EMC solution. The composition of the water-containing LiFSI/EMC solution and the concentrations of the anionic impurities with respect to the electrolyte were measured in the same manner as described above. The results are shown below.
- Composition of the solution, LiFSI: 39.6 mass%, H₂O: 2.0 mass%, EMC concentration: 58.4 mass%
- Concentrations of anionic impurities, F⁻: 874 ppm by mass, Cl⁻ and SO₄²⁻: lower limit of quantification or less
- Anionic component, H₂NSO₃Li: 292 ppm by mass
- Concentration of other impurity, FSO₂NH₂: 0.46 mass%

### «Synthesis Example 5 (Synthesis of Aqueous LiFSI Solution)»

To a slurry obtained by cooling a mixture of 31.9 g of lithium carbonate and 54.8 g of water in an ice bath, 140 g of HFSI (manufactured by NIPPON SHOKUBAI CO., LTD., HFSI purity: 99.5 mass%, impurities: 0.03 mass% FSO₃H and 0.50 mass% FSO₂NH₂) was added dropwise over 30 minutes. The mixture was stirred at the same temperature for two hours and then filtered with Kiriyama filter paper No. 5C to obtain 200 g of an aqueous LiFSI solution (LiFSI/H₂O). The composition of the aqueous LiFSI solution and the concentrations of the anionic impurities with respect to the electrolyte were measured in the same manner as described above. The results are shown below.
- Composition of the solution, LiFSI: 70.2 mass%, H₂O: 29.8 mass%
- Concentrations of anionic impurities, F⁻: 10 ppm by mass, Cl⁻: 21 ppm by mass, SO₄²⁻: lower limit of quantification or less, FSO³⁻: lower limit of quantification or less
- Anionic component, H₂NSO₃Li: 5822 ppm by mass

### <Example 1>

In a dry room (dew point: -40°C), 898 g of the aqueous LiFSI solution (LiFSI/H₂O) obtained in Synthesis Example 1 (preparing), 678 g of DMC, 1.2 g of lithium carbonate as an anionic component (2691 ppm by mass per electrolyte), and 0.8 g of lithium amidesulfate (1792 ppm by mass per electrolyte) were put in a 2 L three-neck flask having a thermometer for measuring the internal temperature, a solvent inlet, and a distillation column (packing: Sulzer EX manufactured by Sulzer Japan, the same applies hereinafter) to prepare a water-containing LiFSI/DMC solution (water-containing sulfonylimide solution for dehydration) containing 28 mass% LiFSI. A cooling tube for condensing a volatilized vapor is provided at the top of the distillation column. A Dean-Stark apparatus is connected to the cooling tube as a phase separation tank for separating the condensed liquid into oil and water.

Subsequently, the inside of the flask was decompressed to 10 kPa using a vacuum pump, and then the flask was immersed in an oil bath to raise the internal temperature of the flask to 32°C in the oil bath for azeotropic distillation of water and DMC. A distillate gas passed through the distillation column and condensed by the condenser (2°C) into a distillate, which was then separated into an aqueous phase and a DMC phase in the Dean-Stark apparatus. The aqueous phase was removed out of the system, and the DMC phase was returned and refluxed to the top of the distillation column using a reflux pump. Distillation was performed under reduced pressure for 23 hours in total (continuous distillation) with the temperature of the oil bath gradually increasing to dehydrate the solution for replacement with DMC. During the dehydration, the internal temperature of the flask changed from 32°C to 70°C, and the difference between the internal temperature of the flask and the oil bath temperature (hereinafter referred to as "Δt") changed from 30°C to 40°C. This dehydration operation was referred to as dehydrating. The obtained suspension was filtered with a membrane filter to obtain a colorless, transparent LiFSI/DMC solution. The composition of the LiFSI/DMC solution and the concentrations of the anionic impurities with respect to the electrolyte were measured in the same manner as described above. The results are shown below.
- Composition of the solution, LiFSI: 47 mass%, H₂O (water content): 46 ppm by mass
- Concentrations of anionic impurities, F⁻: 22 ppm by mass, Cl⁻ and SO₄²⁻: lower limit of quantification or less
- Residual amount of anionic component, H₂NSO₃Li: 345 ppm by mass

### <Example 2>

Dehydration for replacement with DMC was performed under the same conditions as in Example 1 except that Δt was changed from 15°C to 20°C (dehydrating). The obtained suspension was filtered with a membrane filter to obtain a colorless, transparent LiFSI/DMC solution. The composition of the LiFSI/DMC solution and the concentrations of the anionic impurities with respect to the electrolyte were measured in the same manner as described above. The results are shown below.
- Composition of the solution, LiFSI: 44 mass%, H₂O (water content): 48 ppm by mass
- Concentrations of anionic impurities, F⁻, Cl⁻ and SO₄²⁻: lower limits of quantification or less
- Residual amount of anionic component, H₂NSO₃Li: 295 ppm by mass

### <Example 3>

In a dry room (dew point: -40°C), 699 g of the aqueous LiFSI solution (LiFSI/H₂O) obtained in Synthesis Example 1 (preparing), 712 g of EMC, 1.2 g of lithium carbonate as an anionic component (3368 ppm by mass per electrolyte), and 0.6 g of lithium amidesulfate (1757 ppm by mass per electrolyte) were put in a flask of the same type as that used in Example 1 to prepare a water-containing LiFSI/EMC solution (water-containing sulfonylimide solution for dehydration) containing 25 mass% LiFSI.

Subsequently, the inside of the flask was decompressed to 8 kPa using a vacuum pump, and then the flask was immersed in an oil bath to raise the internal temperature of the flask to 33°C in the oil bath for azeotropic distillation of water and EMC. A distillate gas passed through the distillation column and condensed by the condenser (2°C) into a distillate, which was then separated into an aqueous phase and an EMC phase in the Dean-Stark apparatus. The aqueous phase was removed out of the system, and the EMC phase was returned and refluxed to the top of the distillation column using a reflux pump. Distillation was performed under reduced pressure for 30 hours in total (continuous distillation) with the temperature of the oil bath gradually increasing to dehydrate the solution for replacement with EMC. During the dehydration, the internal temperature of the flask changed from 33°C to 64°C, and Δt changed from 15°C to 30°C. This dehydration operation was referred to as dehydrating. The obtained suspension was filtered with a membrane filter to obtain a colorless, transparent LiFSI/EMC solution. The composition of the LiFSI/EMC solution and the concentrations of the anionic impurities with respect to the electrolyte were measured in the same manner as described above. The results are shown below.
- Composition of the solution, LiFSI: 37 mass%, H₂O (water content): 32 ppm by mass
- Concentrations of anionic impurities, F⁻, Cl⁻ and SO₄²⁻: lower limits of quantification or less
- Residual amount of anionic component, H₂NSO₃Li: 189 ppm by mass

### <Example 4>

Dehydration for replacement with EMC was performed under the same conditions as in Example 3 except that Δt was changed from 15°C and 20°C (dehydrating). The obtained suspension was filtered with a membrane filter to obtain a colorless, transparent LiFSI/EMC solution. The composition of the LiFSI/EMC solution and the concentrations of the anionic impurities with respect to the electrolyte were measured in the same manner as described above. The results are shown below.
- Composition of the solution, LiFSI: 36 mass%, H₂O (water content): 31 ppm by mass
- Concentrations of anionic impurities, F⁻, Cl⁻ and SO₄²⁻: lower limits of quantification or less
- Residual amount of anionic component, H₂NSO₃Li: 186 ppm by mass

### <Example 5>

In a dry room (dew point: -40°C), 812 g of the aqueous LiFSI solution (LiFSI/H₂O) obtained in Synthesis Example 2 (preparation step), 665 g of DMC, and 15.0 g of lithium carbonate as an anionic component (23383 ppm by mass per electrolyte) were put in a flask of the same type as that used in Example 1 to prepare a water-containing LiFSI/DMC solution (water-containing sulfonylimide solution for dehydration) containing 44 mass% LiFSI.

Subsequently, the same operation as that of Example 1 was performed except that the inside of the flask was decompressed to 8.5 kPa using a vacuum pump, and then the flask was immersed in an oil bath to raise the internal temperature of the flask to 52°C in the oil bath. Distillation was performed under reduced pressure for 25 hours in total (continuous distillation) with the temperature of the oil bath gradually increasing to dehydrate the solution for replacement with DMC. During the dehydration, the internal temperature of the flask changed from 52°C to 84°C, and Δt changed from 7°C to 20°C. This dehydration operation was referred to as dehydrating. The obtained suspension was filtered with a membrane filter to obtain a colorless, transparent LiFSI/DMC solution. The composition of the LiFSI/DMC solution and the concentrations of the anionic impurities with respect to the electrolyte were measured in the same manner as described above. The results are shown below.
- Composition of the solution, LiFSI: 53 mass%, H₂O (water content): 50 ppm by mass
- Concentrations of anionic impurities, F⁻: 20 ppm by mass, Cl⁻ and SO₄²⁻: lower limits of quantification or less
- Residual amount of anionic component, H₂NSO₃Li: 68 ppm by mass

### <Example 6>

In a dry room (dew point: -40°C), 1263 g of the aqueous LiFSI solution (LiFSI/H₂O) obtained in Synthesis Example 2 (preparation step), 1994 g of EMC, and 4.1 g of lithium carbonate as an anionic component (4108 ppm by mass per electrolyte) were put in a flask of the same type as that used in Example 1 to prepare a water-containing LiFSI/EMC solution (water-containing sulfonylimide solution for dehydration) containing 31 mass% LiFSI.

Subsequently, the same operation as that of Example 1 was performed except that the inside of the flask was decompressed to 8 kPa using a vacuum pump, and then the flask was immersed in an oil bath to raise the internal temperature of the flask to 71°C in the oil bath. Distillation was performed under reduced pressure for 15 hours in total (continuous distillation) with the temperature of the oil bath gradually increasing to dehydrate the solution for replacement with EMC. During the dehydration, the internal temperature of the flask changed from 49°C to 59°C, and Δt changed from 22°C to 31°C. This dehydration operation was referred to as dehydrating. The obtained suspension was filtered with a membrane filter to obtain a colorless, transparent LiFSI/EMC solution. The composition of the LiFSI/EMC solution and the concentrations of the anionic impurities with respect to the electrolyte were measured in the same manner as described above. The results are shown below.
- Composition of the solution, LiFSI: 34 mass%, H₂O (water content): 8 ppm by mass
- Concentrations of anionic impurities, F⁻, Cl⁻ and SO₄²⁻: lower limits of quantification or less
- Residual amount of anionic component, H₂NSO₃Li: 206 ppm by mass

### <Example 7>

In a dry room (dew point: -40°C), 1477 g of the water-containing LiFSI/EMC solution obtained in Synthesis Example 4 (preparation step) and 15.0 g of lithium carbonate as an anionic component (25647 ppm by mass per electrolyte) were put in a flask of the same type as that used in Example 1 to prepare a water-containing LiFSI/EMC solution (water-containing sulfonylimide solution for dehydration) containing 40 mass% LiFSI.

Subsequently, the same operation as that of Example 1 was performed except that the inside of the flask was decompressed to 5.5 kPa using a vacuum pump, and then the flask was immersed in an oil bath to raise the internal temperature of the flask to 58°C in the oil bath. Distillation was performed under reduced pressure for seven hours in total (continuous distillation) with the temperature of the oil bath gradually increasing to dehydrate the solution for replacement with EMC. During the dehydration, the internal temperature of the flask changed from 57°C to 64°C, and Δt changed from 5°C to 25°C. This dehydration operation was referred to as dehydrating. The obtained suspension was filtered with a membrane filter to obtain a colorless, transparent LiFSI/EMC solution. The composition of the LiFSI/EMC solution and the concentrations of the anionic impurities with respect to the electrolyte were measured in the same manner as described above. The results are shown below.
- Composition of the solution, LiFSI: 42 mass%, H₂O (water content): 26 ppm by mass
- Concentrations of anionic impurities, F⁻: 25 ppm by mass, Cl⁻: lower limit of quantification or less, SO₄²⁻: 12 ppm by mass
- Residual amount of anionic component, H₂NSO₃Li: 92 ppm by mass

### <Example 8>

In a dry room (dew point: -40°C), 51 g of the aqueous LiFSI solution (FSI concentration: 70 wt%, content of anionic component: 5822 ppm) obtained in Synthesis Example 5, 212 g of EMC, and 1.1 g of lithium phosphate as an anionic component (manufactured by Sigma-Aldrich, added in an amount of 14233 ppm per electrolyte during the step) were put in a 500 mL eggplant flask to prepare a water-containing LiFSI/EMC solution (water-containing sulfonylimide solution for dehydration) containing 14 mass% LiFSI.

Subsequently, water and EMC were azeotropically distilled off with an evaporator (7.0 kPa, oil bath temperature: 70°C). After 30 minutes, the pressure in the flask was released, non-aqueous EMC was added, and distillation was performed again under reduced pressure. This operation was repeated, and a cumulative total of 2089 g of EMC was added.

Part of the obtained solution was filtered with a membrane filter to obtain a colorless, transparent LiFSI/EMC solution containing 41 mass% LiFSI. The water content measured in the same manner as described above was 9.5 ppm by mass. The composition of the solution and the concentrations of the anionic impurities with respect to the electrolyte were measured in the same manner as described above. The results are shown below.
- Composition of the solution, LiFSI: 41 mass%, H₂O (water content): 9.5 ppm by mass
- Concentrations of anionic impurities, F⁻: 18.0 ppm by mass, Cl⁻: lower limit of quantification or less, SO₄²⁻: 126 ppm by mass
- Residual amount of anionic components, H₂NSO₃Li: 1717 ppm by mass, Li₃PO₄: 7.8 ppm by mass

### <Example 9>

In a dry room (dew point: -40°C), 50 g of the aqueous LiFSI solution (FSI concentration: 70 wt%, content of anionic component: 5822 ppm) obtained in Synthesis Example 5, 230 g of EMC, 0.52 g of lithium carbonate as an anionic component (added in an amount of 14,733 ppm per electrolyte during the step), and 0.63 g of a 70 mass% aqueous isethionic acid solution (manufactured by FUJIFILM Wako Pure Chemical Corporation, added in an amount of 12495 ppm per electrolyte during the step) were put in a 500 mL eggplant flask to prepare a water-containing LiF SI/EMC solution (water-containing sulfonylimide solution for dehydration) containing 13 mass% LiFSI.

Subsequently, water and EMC were azeotropically distilled off with an evaporator (5.0 kPa, oil bath temperature: 70°C). After 30 minutes, the pressure in the flask was released, non-aqueous EMC was added, and distillation was performed again under reduced pressure. This operation was repeated, and a cumulative total of 1748 g of EMC was added.

Part of the obtained solution was filtered with a membrane filter to obtain a colorless, transparent LiFSI/EMC solution containing 44 mass% LiFSI. The water content measured in the same manner as described above was 18.3 ppm by mass. The composition of the solution and the concentrations of the anionic impurities with respect to the electrolyte were measured in the same manner as described above. The results are shown below.
- Composition of the solution, LiFSI: 44 mass%, H₂O (water content): 18.3 ppm by mass
- Concentrations of anionic impurities, F⁻: 15.4 ppm by mass, Cl⁻ and SO₄²⁻: lower limit of quantification or less
- Residual amount of anionic component, Isethionic acid Li(HO(CH₂)₂SO₃Li): 5356 ppm by mass

### <Comparative Example 1>

In a dry room (dew point: -40°C), 19 g of the aqueous LiFSI solution (LiPSI/H₂O) obtained in Synthesis Example 1 and 63 g of DMC were put in a 2 L three-neck flask having a thermometer for measuring the internal temperature, a solvent inlet, and a Liebig condenser to prepare a water-containing LiFSI/DMC solution (water-containing sulfonylimide solution for dehydration) containing 12 mass% LiFSI.

Subsequently, the inside of the flask was decompressed to 5.0 kPa using a vacuum pump, and then the flask was immersed in an oil bath to raise the internal temperature of the flask to 25°C in the oil bath (oil bath temperature: 60°C) for azeotropic distillation of water and DMC. After 20 minutes, the pressure in the flask was released, non-aqueous EMC (water content < 30 ppm by mass) was added, and distillation was performed again under reduced pressure. This operation was repeated, and a cumulative total of 606.0 g of DMC was added.

Part of the obtained solution was filtered with a membrane filter to obtain a colorless, transparent LiFSI/DMC solution containing 56 mass% LiFSI. The water content of the LiFSI/DMC solution measured in the same manner as described above was 115 ppm by mass. The composition of the solution and the concentrations of the anionic impurities with respect to the electrolyte were measured in the same manner as described above. The results are shown below.
- Composition of the solution, LiFSI: 56 mass%, H₂O: 115 ppm by mass
- Concentrations of anionic impurities, F⁻: 10 ppm by mass, Cl⁻ and SO₄²⁻: lower limit of quantification or less
- Residual amount of anionic component, H₂NSO₃Li: 411 ppm by mass

Table 1 below shows the number of times DMC was added in Comparative Example 1, the total amount of DMC after each addition (total amount added), the water content of the solution after each addition, and the dehydration efficiency after each addition. The dehydration efficiency after each addition was calculated by the following mathematical equation (2). The smaller the value of the dehydration efficiency is, the higher the efficiency of dehydration and replacement with DMC is. Dehydration efficiency = "the total amount of DMC used to reach the water content after each addition" / "the weight of LiFSI" (2)

**[Table 1]**

| Number of times DMC added | Total amount of DMC after each addition (total amount added) [g] | Water content of the solution after each addition [ppm by mass] | Dehydration efficiency after each addition |
|---|---|---|---|
| 0 | 0 | 129042 | 0 |
| 1 | 115 | 70889 | 12 |
| 2 | 168 | 26725 | 18 |
| 3 | 218 | 11345 | 23 |
| 4 | 274 | 3872 | 29 |
| 5 | 314 | 1749 | 33 |
| 6 | 359 | 766 | 38 |
| 7 | 405 | 489 | 43 |
| 8 | 455 | 292 | 48 |
| 9 | 504 | 191 | 53 |
| 10 | 556 | 143 | 59 |
| 11 | 606 | 115 | 64 |

### <Comparative Example 2>

In a dry room (dew point: -40°C), 242 g of the aqueous LiFSI solution (LiPSI/H₂O) obtained in Synthesis Example 1 and 920 g of EMC were put in a flask of the same type as that used in Example 1 to prepare a water-containing LiFSI/EMC solution (water-containing sulfonylimide solution for dehydration) containing 25 mass% LiFSI.

Subsequently, the inside of the flask was decompressed to 5.8 kPa using a vacuum pump, and then the flask was immersed in an oil bath to raise the internal temperature of the flask to 25°C in the oil bath (oil bath temperature: 50°C) for azeotropic distillation of water and EMC. A distillate gas passed through the distillation column and condensed by the condenser (2°C) into a distillate, which was then separated into an aqueous phase and an EMC phase in the Dean-Stark apparatus. The aqueous phase was removed out of the system, and the EMC phase was returned and refluxed to the top of the distillation column using a reflux pump. When the internal temperature of the flask reached 35°C (oil bath temperature: 50°C) after 4.5 hours, the internal pressure was changed to 3.5 KPa, the internal temperature was lowered to 28°C, and the distillation was performed under reduced pressure (continuous distillation). When the internal temperature reached 35°C (oil bath temperature: 50°C) again after 18 hours, the internal pressure was changed to 2.5 KPa, and the distillation was performed under reduced pressure (continuous distillation) for 2.5 hours. Part of the obtained solution was filtered with a membrane filter to obtain a colorless, transparent LiFSI/EMC solution containing 12 mass% LiFSI. The water content of the LiFSI/EMC solution measured in the same manner as described above was 31 ppm by mass.

The obtained LiFSI/EMC solution was concentrated at 2.5 KPa and an oil bath temperature of 50°C. The obtained solution was filtered with a membrane filter to obtain 263.3 g of a colorless, transparent LiFSI/EMC solution. The composition of the condensed LiFSI/EMC solution and the concentrations of the anionic impurities with respect to the electrolyte were measured in the same manner as described above. The results are shown below.
- Composition of the solution, LiFSI: 41 mass%, H₂O: 29 ppm by mass
- Concentrations of anionic impurities, F⁻: 28 ppm by mass, Cl⁻ and SO₄²⁻: lower limit of quantification or less
- Residual amount of anionic component, H₂NSO₃Li: 68 ppm by mass

### [Evaluation]

Table 2 below shows the types of the solvents, types and amounts of the anionic components added, and dehydration efficiency of each of the LiFSI solutions (compositions) obtained through the preparing and the dehydrating. In Table 2, the amount of the anionic component added per electrolyte during the dehydrating refers to a value calculated based on the weight of the anionic component added to the water-containing LiFSI solution (the total weight when two or more anionic components are added) to prepare the water-containing sulfonylimide solution for dehydration. The content of the anionic component per electrolyte in the dehydrating is a value calculated based on the total amount of the content of the anionic component in the raw material of the water-containing LiFSI solution and the amount of the anionic component added. The dehydration efficiency was calculated by the following mathematical equation (3). The smaller the value of the dehydration efficiency is, the higher the efficiency of dehydration and replacement with the non-aqueous solvent is. Dehydration efficiency = "the total amount of the solvent added to reach a water content of 50 ppm by mass or the total amount of ascending vapor" / "the weight of LiFSI" (3) Note that the total amount of the non-aqueous solvent in Comparative Example 1 is an amount required to reach a water content of 115 ppm by mass.

**[Table 2]**

| Example No. and Comparative example No. | | Raw material/Preparing | | | | Dehydrating | | | | | After dehydrating | | |
|---|---|---|---|---|---|---|---|---|---|---|---|---|---|
| | | Water-containing LiFSI solution | | | Content of anionic component in raw material (per electrolyte) [ppm by mass] | Amount of water-containing LiFSI solution charged [g] | Additive solvent | | | | Anionic component | Residual amount of anionic component (per electrolyte) [ppm by mass] | Dehydration efficiency (Water content: 50 ppm by mass) |
| | | Synthesis example | LiFSI concentration [mass%] | Solvent | | | Type | Total amount or total amount of ascending vapor [g] | Amount of **anionic** component added during step (per electrolyte) [ppm by mass] | Content of anionic component during step (per electrolyte) [ppm by mass] | | | |
| Example | 1 | 1 | 50 | Aqueous solution | 3671 | 898 | DMC | 16233 | 4483 | 8154 | H₂NSO₃Li | 345 | 36 |
| | 2 | 1 | 50 | Aqueous solution | 3671 | 898 | DMC | 22032 | 4483 | 8154 | H₂NSO₃Li | 295 | 49 |
| | 3 | 1 | 50 | Aqueous solution | 3671 | 699 | EMC | 5565 | 5125 | 8796 | H₂NSO₃Li | 189 | 16 |
| | 4 | 1 | 50 | Aqueous solution | 3671 | 699 | EMC | 7468 | 5125 | 8796 | H₂NSO₃Li | 186 | 21 |
| | 5 | 2 | 79 | Aqueous solution | 6109 | 812 | DMC | 8149 | 23383 | 29492 | H₂NSO₃Li | 68 | 13 |
| | 6 | 2 | 79 | Aqueous solution | 6109 | 1263 | EMC | 25453 | 4108 | 10217 | H₂NSO₃Li | 206 | 26 |
| | 7 | 4 | 40 | Water-containing EMC | 292 | 1477 | EMC | 2166 | 25647 | 25939 | H₂NSO₃Li | 92 | 4 |
| | 8 | 5 | 70 | Aqueous solution | 5822 | 51 | EMC | 2089 | 14233 | 20055 | H₂NSO₃Li+Li₃PO₄ | 1725 | 58 |
| | 9 | 5 | 70 | Aqueous solution | 5822 | 50 | EMC | 1748 | 27228 | 33050 | HO(CH₂)₂SO₃Li | 5356 | 50 |
| Comparative Example | 1 | 1 | 50 | Aqueous solution | 3671 | 19 | DMC | 606 | 0 | 3671 | H₂NSO₃Li | 411 | 64 (Water content: 115 ppm by mass) |
| | 2 | 1 | 50 | Aqueous solution | 3671 | 242 | EMC | 10760 | 0 | 3671 | H₂NSO₃Li | 68 | 89 |

### (Discussion)

The results shown in Table 2 indicate that the production method of each Example includes the dehydrating of adding the anionic component (acid component) to the sulfonylimide solution obtained in the preparing together with the non-aqueous solvent for dehydration and replacement with a non-aqueous solvent, and thus, had the higher dehydration efficiency than the production method of each Comparative Example in which the dehydration was performed for replacement with a non-aqueous solvent without adding the anionic component.

Specifically, the production method of each Example can be said to have the higher dehydration efficiency because the anionic component was contained at a concentration of 4000 ppm by mass or more (the total concentration when two or more anionic components are used in combination) with respect to LiFSI (electrolyte) in the dehydrating.

In the dehydrating of the production method of each Example, the pressure (degree of decompression) can be set relatively high, and the heating temperature can also be set relatively high (e.g., 50°C or higher). This improves not only the dehydration efficiency but also the production efficiency (productivity) of the composition.

On the other hand, the pressure was set low in the production methods of Comparative Examples 1 and 2, and the production efficiency was poor.

### INDUSTRIAL APPLICABILITY

As can be seen from above, the present disclosure is suitable for a composition usable as a non-aqueous electrolyte solution used in lithium ion secondary batteries and as a material of the non-aqueous electrolyte solution.

## Claims

1. A method for producing a composition containing an electrolyte, a non-aqueous solvent, and an anionic component,
the electrolyte containing a sulfonylimide compound represented by the general formula (1),
the anionic component containing a conjugate acid with an acid dissociation constant pKa (a first-step acid dissociation constant pKa1 for acids that ionize multiple times) of 0 or more and 6.5 or less and is contained at a concentration of 10000 ppm by mass or less with respect to the electrolyte, the anionic component is at least one selected from the group consisting of an amidosulfuric acid component, a carboxylic acid component, a carbonic acid component, and a phosphoric acid component,
the method comprising:
- preparing a water-containing sulfonylimide solution for dehydration containing the anionic component, the electrolyte, water and the non-aqueous solvent, and
- dehydrating the water-containing sulfonylimide solution for dehydration by azeotropic distillation of the water and the non-aqueous solvent,
LiN(XSO₂)(FSO₂) (1) (where X represents a fluorine atom, an alkyl group with 1 to 6 carbon atoms, or a fluoroalkyl group with 1 to 6 carbon atoms).

2. The method of claim 1, wherein
in the dehydrating, the water-containing sulfonylimide solution for dehydration contains the anionic component at a concentration of 4000 ppm by mass or more with respect to the electrolyte.

3. The method of claim 2, wherein in the dehydrating, the water-containing sulfonylimide solution for dehydration contains the anionic component at a concentration of 8000 ppm by mass or more with respect to the electrolyte.

4. The method of claim 1, wherein
the dehydrating includes adding the anionic component at a concentration of 1000 ppm by mass or more with respect to the electrolyte.

5. The method of any one of claims 1 to 3, wherein
the anionic component is at least one selected from the group consisting of a sulfonic acid component, a sulfinic acid component, a carboxylic acid component, a carbonic acid component, a phosphoric acid component, a phosphonic acid component, derivatives thereof, and salts thereof.

6. The method of any one of claims 1 to 5, wherein
the anionic component includes at least one selected from the group consisting of amidosulfuric acid and salts thereof and amidosulfuric acid derivatives and salts thereof, and
the amidosulfuric acid derivatives and the salts thereof are compounds represented by the general formula (2): 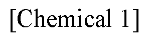 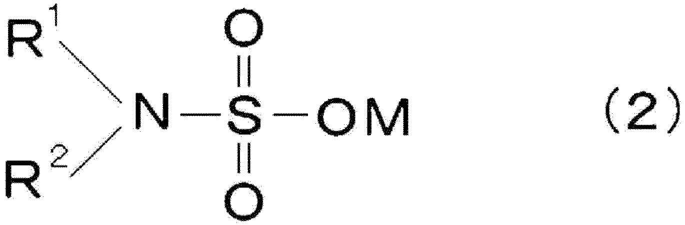 (where R¹ and R² each represent H (hydrogen atom), a hydroxyl group, or an alkyl group with 1 to 10 carbon atoms, a cycloalkyl group with 3 to 10 carbon atoms, an aryl group with 6 to 16 carbon atoms, an aralkyl group with 7 to 16 carbon atoms, or an alkanoyl group with 2 to 16 carbon atoms, each optionally having a substituent, and R¹ and R² optionally contain a heteroatom and optionally form a ring structure, R¹ and R² are identical to or different from each other when representing the group other than H (when either one of R¹ or R² is H, R¹ and R² are not identical to each other (R¹ and R² do not simultaneously represent H), and M represents H (hydrogen atom) or a metal atom).

7. The method of any one of claims 1 to 5, wherein
the anionic component includes at least one selected from the group consisting of amidosulfuric acid and alkali metal salts of amidosulfuric acid.

8. The method of any one of claims 1 to 5, wherein
the anionic component contains an alkali metal salt of amidosulfuric acid.

9. The method of any one of claims 1 to 8, wherein
the non-aqueous solvent contains a chain carbonate solvent.

10. The method of any one of claims 1 to 9, wherein
the composition has a water content of 10000 ppm by mass or less.

11. The method of any one of claims 1 to 10, wherein
the composition has a water content of 50 ppm by mass or less,
dehydration efficiency in the dehydrating calculated by the following mathematical equation: Dehydration efficiency = "the total amount of the solvent added to reach a water content of 50 ppm by mass or the total amount of ascending vapor" / "the weight of the electrolyte"
is 80 or less.

12. The method of any one of claims 1 to 10, wherein the composition has a water content of 1000 ppm by mass or less.

## Patentansprüche

1. Verfahren zum Herstellen einer Zusammensetzung, die einen Elektrolyten, ein nichtwässriges Lösungsmittel und eine anionische Komponente enthält,
wobei der Elektrolyt eine Sulfonylimidverbindung enthält, dargestellt durch die allgemeine Formel (1),
wobei die anionische Komponente eine Konjugatsäure mit einer Säuredissoziationskonstante pKa (eine erste Stufen-Säuredissoziationskonstante pKa1 für mehrfach ionisierende Säuren) von 0 oder mehr und 6,5 oder weniger enthält und in einer Konzentration von 10000 ppm nach Masse oder weniger in Bezug auf den Elektrolyten enthalten ist, die anionische Komponente ist mindestens eine Komponente, die aus der Gruppe ausgewählt ist, die aus einer Amidosulfonsäurekomponente, einer Carbonsäurekomponente, einer Kohlensäurekomponente und einer Phosphorsäurekomponente besteht,
wobei das Verfahren Folgendes umfasst:
- Vorbereiten einer wasserhaltigen Sulfonylimidlösung zum Dehydrieren, die die anionische Komponente, den Elektrolyten, Wasser und das nichtwässrige Lösungsmittel enthält, und
- Dehydrieren der wasserhaltigen Sulfonylimidlösung zum Dehydrieren durch azeotrope Destillation des Wassers und des nichtwässrigen Lösungsmittels,
LiN(XSO₂)(FSO₂) (1) (wobei X ein Fluoratom, eine Alkylgruppe mit 1 bis 6 Kohlenstoffatomen oder eine Fluoralkylgruppe mit 1 bis 6 Kohlenstoffatomen darstellt).

2. Verfahren nach Anspruch 1, wobei:
die wasserhaltige Sulfonylimidlösung zum Dehydrieren bei dem Dehydrieren die anionische Komponente in einer Konzentration von 4000 ppm nach Masse oder mehr in Bezug auf den Elektrolyten enthält.

3. Verfahren nach Anspruch 2, wobei die wasserhaltige Sulfonylimidlösung zum Dehydrieren bei dem Dehydrieren die anionische Komponente in einer Konzentration von 8000 ppm nach Masse oder mehr in Bezug auf den Elektrolyten enthält.

4. Verfahren nach Anspruch 1, wobei:
das Dehydrieren die Zugabe der anionischen Komponente in einer Konzentration von 1000 ppm Masse oder mehr in Bezug auf den Elektrolyten beinhaltet.

5. Verfahren nach einem der Ansprüche 1 bis 3, wobei
die anionische Komponente mindestens eine Komponente ist, die aus der Gruppe ausgewählt ist, die aus einer Sulfonsäurekomponente, einer Sulfinsäurekomponente, einer Carbonsäurekomponente, einer Kohlensäurekomponente, einer Phosphorsäurekomponente, einer Phosphonsäurekomponente, Derivaten davon und Salzen davon besteht.

6. Verfahren nach einem der Ansprüche 1 bis 5, wobei
die anionische Komponente mindestens eine Komponente ist, die aus der Gruppe ausgewählt ist, die aus Amidosulfursäure und Salzen davon und Amidosulfursäurederivaten und Salzen davon, besteht, und
die Derivate der Amidosulfursäure und deren Salze Verbindungen sind, die durch die allgemeine Formel (2) dargestellt werden: 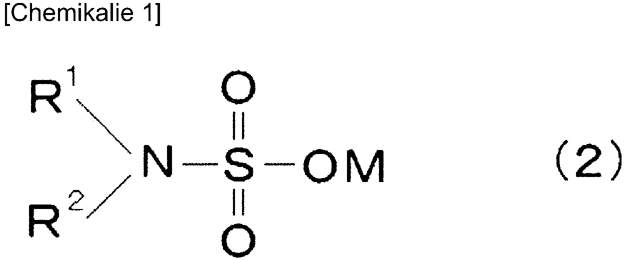
(wobei R¹ und R² jeweils H (Wasserstoffatom), eine Hydroxylgruppe oder eine Alkylgruppe mit 1 bis 10 Kohlenstoffatomen, eine Cycloalkylgruppe mit 3 bis 10 Kohlenstoffatomen, eine Arylgruppe mit 6 bis 16 Kohlenstoffatomen, eine Aralkylgruppe mit 7 bis 16 Kohlenstoffatomen oder eine Alkanoylgruppe mit 2 bis 16 Kohlenstoffatomen darstellen, die jeweils optional einen Substituenten aufweisen, und R¹ und R² optional ein Heteroatom enthalten und optional eine Ringstruktur bilden, R¹ und R² identisch miteinander sind oder sich voneinander unterscheiden, wenn sie eine andere Gruppe als H darstellen (wenn entweder R¹ oder R² H ist, sind R¹ und R² nicht identisch miteinander (R¹ und R² stellen nicht gleichzeitig H dar), und M für H (Wasserstoffatom) oder ein Metallatom steht) .

7. Verfahren nach einem der Ansprüche 1 bis 5, wobei
die anionische Komponente mindestens eine Komponente ist, die aus der Gruppe ausgewählt ist, die aus Amidosulfursäure und Alkalimetallsalzen von Amidosulfursäure besteht.

8. Verfahren nach einem der Ansprüche 1 bis 5, wobei
die anionische Komponente ein Alkalimetallsalz von Amidosulfursäure enthält.

9. Verfahren nach einem der Ansprüche 1 bis 8, wobei
das nichtwässrige Lösungsmittel ein Kettenkarbonatlösungsmittel enthält.

10. Verfahren nach einem der Ansprüche 1 bis 9, wobei
die Zusammensetzung einen Wassergehalt von 10000 ppm nach Masse oder weniger aufweist.

11. Verfahren nach einem der Ansprüche 1 bis 10, wobei
die Zusammensetzung einen Wassergehalt von 50 ppm nach Masse oder weniger aufweist,
wobei der Entwässerungswirkungsgrad bei der Entwässerung nach folgender mathematischer Gleichung berechnet wird: Entwässerungswirkungsgrad = "die Gesamtmenge des Lösungsmittels, die hinzugefügt wird, um einen Wassergehalt von 50 ppm nach Masse zu erreichen, oder die Gesamtmenge des aufsteigenden Dampfes"/"das Gewicht des Elektrolyten" beträgt 80 oder weniger.

12. Verfahren nach einem der Ansprüche 1 bis 10, wobei die Zusammensetzung einen Wassergehalt von 1000 ppm Masse oder weniger aufweist.

## Revendications

1. Procédé de production d'une composition contenant un électrolyte, un solvant non aqueux et un composant anionique,
l'électrolyte contenant un composé sulfonylimide représenté par la formule générale (1),
le composant anionique contenant un acide conjugué ayant une constante de dissociation d'acide pKa (une constante de dissociation d'acide de première étape pKa1 pour les acides qui s'ionisent plusieurs fois) supérieure ou égale à 0 et inférieure ou égale à 6,5 et est contenu à une concentration inférieure ou égale à 10000 ppm en masse par rapport à l'électrolyte, le composant anionique est au moins un choisi dans le groupe constitué par un composant acide amidosulfurique, un composant acide carboxylique, un composant acide carbonique et un composant acide phosphorique,
le procédé comprenant :
- la préparation d'une solution de sulfonylimide contenant de l'eau à déshydrater, contenant le composant anionique, l'électrolyte, l'eau et le solvant non aqueux, et
- la déshydratation de la solution de sulfonylimide contenant de l'eau à déshydrater par distillation azéotropique de l'eau et du solvant non aqueux,
LiN(XSO₂)(FSO₂) (1) (où X représente un atome de fluor, un groupe alkyle ayant 1 à 6 atomes de carbone ou un groupe fluoroalkyle ayant 1 à 6 atomes de carbone).

2. Procédé de la revendication 1, dans lequel
lors de la déshydratation, la solution de sulfonylimide contenant de l'eau à déshydrater contient le composant anionique à une concentration supérieure ou égale à 4000 ppm en masse par rapport à l'électrolyte.

3. Procédé de la revendication 2, dans lequel lors de la déshydratation, la solution de sulfonylimide contenant de l'eau à déshydrater contient le composant anionique à une concentration supérieure ou égale à 8000 ppm en masse par rapport à l'électrolyte.

4. Procédé de la revendication 1, dans lequel
la déshydratation comprend l'ajout du composant anionique à une concentration supérieure ou égale à 1000 ppm en masse par rapport à l'électrolyte.

5. Procédé de l'une quelconque des revendications 1 à 3, dans lequel
le composant anionique est au moins un choisi dans le groupe constitué par un composant acide sulfonique, un composant acide sulfinique, un composant acide carboxylique, un composant acide carbonique, un composant acide phosphorique, un composant acide phosphonique, leurs dérivés et leurs sels.

6. Procédé de l'une quelconque des revendications 1 à 5, dans lequel
le composant anionique comprend au moins un choisi dans le groupe constitué par l'acide amidosulfurique et ses sels, et les dérivés de l'acide amidosulfurique et leurs sels, et
les dérivés de l'acide amidosulfurique et leurs sels sont des composés représentés par la formule générale (2) : 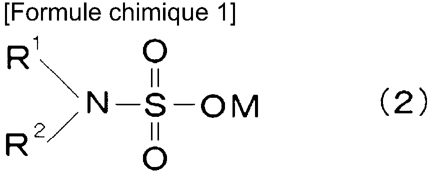
(où R¹ et R² représentent chacun H (atome d'hydrogène), un groupe hydroxyle ou un groupe alkyle ayant 1 à 10 atomes de carbone, un groupe cycloalkyle ayant 3 à 10 atomes de carbone, un groupe aryle ayant 6 à 16 atomes de carbone, un groupe aralkyle ayant 7 à 16 atomes de carbone ou un groupe alcanoyle ayant 2 à 16 atomes de carbone, chacun ayant facultativement un substituant, et R¹ et R² contiennent facultativement un hétéroatome et forment facultativement une structure cyclique, R¹ et R² sont identiques ou différents l'un de l'autre lorsqu'ils représentent le groupe autre que H (lorsque l'un ou l'autre de R¹ ou R² est H, R¹ et R² ne sont pas identiques l'un à l'autre (R¹ et R² ne représentent pas simultanément H), et M représente H (atome d'hydrogène) ou un atome métallique).

7. Procédé de l'une quelconque des revendications 1 à 5, dans lequel
le composant anionique comprend au moins un choisi dans le groupe constitué par l'acide amidosulfurique et les sels de métaux alcalins de l'acide amidosulfurique.

8. Procédé de l'une quelconque des revendications 1 à 5, dans lequel
le composant anionique contient un sel de métal alcalin de l'acide amidosulfurique.

9. Procédé de l'une quelconque des revendications 1 à 8, dans lequel
le solvant non aqueux contient un solvant carbonate à chaîne.

10. Procédé de l'une quelconque des revendications 1 à 9, dans lequel
la composition a une teneur en eau inférieure ou égale à 10000 ppm en masse.

11. Procédé de l'une quelconque des revendications 1 à 10, dans lequel
la composition a une teneur en eau inférieure ou égale à 50 ppm en masse,
l'efficacité de déshydratation lors de la déshydratation calculée par l'équation mathématique suivante : Efficacité de déshydratation = « la quantité totale du solvant ajoutée pour atteindre une teneur en eau de 50 ppm en masse ou la quantité totale de vapeur ascendante » / « poids de l'électrolyte »
est inférieure ou égale à 80.

12. Procédé de l'une quelconque des revendications 1 à 10, dans lequel la composition a une teneur en eau inférieure ou égale à 1000 ppm en masse.
